# FASCICULE DE BREVET EUROPEEN

(11) **EP 1 839 379 B1**
(45) Date de publication et mention de la délivrance du brevet: **24.10.2012**
(21) Numéro de dépôt: 05850437.4
(22) Date de dépôt: 05.12.2005
(51) Int. Cl.: H02G 1/12

(54) **OUTIL MANUEL POUR LE DENUDAGE DES CÂBLES ELECTRIQUES ET JEU D'OUTILS POUR LE DENUDAGE DES DITS CÂBLES**
MANUELLES WERKZEUG ZUM ABISOLIEREN VON ELEKTRISCHEN KABELN UND WERKZEUGSATZ ZUM ABISOLIEREN DIESER KABEL
MANUAL TOOL FOR STRIPPING ELECTRIC CABLES AND TOOL SET FOR STRIPPING SAID CABLES

(30) Priorité: 05.12.2004 FR 0412921
(43) Date de publication de la demande: 03.10.2007
(73) Titulaire: Derancourt S.A.S., 66270 Le Soler (FR)
(72) Inventeur: DERANCOURT, Frédéric, F-66270 Le Soler (FR)
(74) Mandataire: Ravina, Bernard
(86) Numéro de dépôt international: PCT/EP2005/056475
(87) Numéro de publication internationale: WO 2006/058924

(56) Documents cités:
- FR-A- 2 739 503
- FR-A- 2 763 272

## Description

La présente invention est du domaine des matériels utilisés pour l'apprêtement, notamment des extrémités des câbles des lignes électriques enterrées en vue d'en retirer sur une longueur appropriée les couches isolantes et semi-conductrices qui protègent le conducteur électrique central.

Typiquement ce genre de câble possède autour de l'âme centrale métallique, une couche isolante en matière synthétique revêtue sur sa face interne et externe de couches isolantes dites semi-conducteurs. Autour de la couche isolante est disposée une gaine externe protectrice isolante. Entre le semi-conducteur externe et la gaine externe, le câble est équipé d'un ruban d'aluminium contrecollé.

Il existe essentiellement deux types de câbles : les câbles dont le semi-conducteur externe est pelable et séparable de la couche isolante et les câbles dont le semi conducteur externe est non pelable et est inséparable de la couche isolante.

Quel que soit le type auquel ils appartiennent, les câbles, dans les réseaux de distribution, sont habituellement associés par trois en tresse et transportent et distribuent le courant triphasé, chaque câble transportant l'une des trois phases. Chaque tresse est composée d'un même type de câble.

En vue du raccordement des câbles d'un premier réseau vers un deuxième réseau, les extrémités de ces câbles sont dénudées pour dégager l'âme conductrice. Cette âme est ensuite engagée dans des boîtiers de raccordement appropriés.

Les spécifications techniques fixent les différentes longueurs de dénudage. Ainsi l'âme conductrice est dégagée sur une première longueur, la couche semi-conductrice sur une deuxième longueur et enfin la gaine isolante sur une troisième longueur, le dénudage s'effectuant en gradins successifs.

On connaît déjà divers outils peur apprêter les câbles. Ces outils mettent en oeuvre deux blocs mâchoires antagonistes formant chacun un Vé délimitant avec le Vé de l'autre bloc mâchoire, un logement dans lequel est introduite l'extrémité du câble à apprêter. Ces deux blocs mâchoire sont montés sur un même bâti de manière mobile pour l'un et de manière fixe pour l'autre. Typiquement, le bloc mâchoire mobile est actionné par un mécanisme du type vis et écrou, l'écrou étant formé dans ou porté par le bloc mâchoire mobile, tandis que la vis est portée par le bâti. L'un au moins des deux blocs mâchoire porte une lame de coupe faisant saillie dans le logement du câble pour venir par entraînement en rotation de l'outil sur le câble découper la gaine externe ou le semi-conducteur externe ou la couche isolante entourant le conducteur électrique.

De tels outils sont connus de nombreux documents brevet, on peut citer par exemple les documents FR-A-2 121 141, FR-A-2 607 636, FR-A-2 739 503, FR-A-2 736 475.

Le document FR-A-2 121 141, montre un outil pour apprêter un câble électrique. Selon ce document, les lames de coupe sont montées sur l'une des faces latérales des blocs mâchoires et sont maintenues chacune en position par une vis de serrage engagée d'abord dans un perçage traversant de la lame et ensuite dans un taraudage du bloc. Pour ajuster la lame en position, et par voie de conséquence, régler la profondeur de coupe, le perçage traversant est organisé en lumière oblongue. Avec une telle configuration, il est difficile de régler la profondeur de coupe à une valeur précise. Or les cahiers des charges interdisent, lors de l'opération de retrait d'une couche, l'endommagement de la couche immédiatement inférieure ceci pour éviter par les entailles qui pourraient être formées, la création d'amorces de rupture dans les couches isolantes. Or l'imprécision du réglage augmente le risque de détérioration des couches isolantes.

Une solution à ce problème a été apportée par le FR-A-2 607 636 et par le FR-A-2 739 503.

Dans l'outil selon le FR-A-2 607 636, lequel est destiné spécifiquement au retrait de la couche d'isolant externe, la lame de coupe est associée à mécanisme de réglage micrométrique et le bloc qui la porte est doté d'une saillie comprenant une surface plane d'appui du câble, la lame formant saillie par rapport à cette surface. Cependant la lame de coupe est fixée sur le bloc par une vis de serrage dont l'inconvénient est de pouvoir se desserrer en cours d'utilisation entraînant ainsi la modification de la profondeur de coupe.

L'outil selon le FR-A-2 739 503 comprend deux blocs mâchoires dont un est fixe et l'autre est mobile et est monté de manière coulissante sur deux colonnes de guidage fixées au bloc fixe.

Le bloc mobile est manoeuvré en éloignement ou rapprochement du bloc fixe par une vis monté fixe en translation dans le bloc fixe et engagée en vissage dans un taraudage pratiqué dans le bloc mobile. L'un au moins des deux blocs est équipé d'une rainure en Vé, et les deux blocs déterminent l'un avec l'autre un logement pour le câble. Ce document montre de plus un système d'indexage de la lame de coupe porté par la mâchoire en Vé de l'outil. Un tel système permet le réglage de la saillie de la lame dans le Vé et le réglage de l'inclinaison de cette dernière. Un tel système, s'il évite bien la modification involontaire de la profondeur de la lame de coupe dans le Vé, ne permet pas cependant de conserver sans modification du réglage, une même valeur de profondeur de coupe dans des câbles de différents diamètres ceci en raison du fait que le degré d'enfoncement du câble dans le Vé de la mâchoire dépend justement de son diamètre. Cet outil est principalement destiné au retrait des gaines extérieures et des couches isolantes.

Le FR-A-2 736 475 est relatif à un outil avec lequel il est possible de réaliser successivement plusieurs opérations complémentaires sur le câble. Ainsi avec cet outil, il est possible de réaliser successivement le retrait de la gaine externe, le retrait du semi conducteur externe pelable et le retrait de la couche isolante. Pour le retrait du semi conducteur externe non pelable il est fait appel à un outil annexe. Dans le cas d'une intervention de deux personnes sur une même tresse ou sur deux câbles distincts à raccorder l'un à l'autre, ce qui est souvent le cas, l'une de ces deux personnes devra attendre que l'autre ait achevé son travail à l'aide de cet outil pour entreprendre le sien.

Or pour réduire la durée de l'intervention il y a lieu d'accomplir plusieurs tâches simultanément par exemple, une opération de retrait de la gaine externe sur l'un des câbles et une opération de retrait de la couche semi conductrice pelable ou non pelable sur l'autre câble.

On connaît aussi du FR 2 763 272 un outil de coupe tangentielle de tubes ou câbles optiques. Plus particulièrement l'outil selon ce document est conçu pour agir à la manière d'un rabot et utilisable principalement pour la découpe de la gaine de câbles de fibres optiques.

L'outil selon ce document comprend un bâti formé de deux colonnes parallèles jointes à leurs extrémités par deux entretoises afin de former un cadre rigide. Les colonnes de ce cadre reçoivent en coulissement deux blocs 20a et 20b mobiles vers un guidage chanfreiné installé fixement sur les colonnes en zone centrale. L'outil est de plus équipé d'un axe fileté mobile en rotation s'étendant de part et d'autre du guidage chanfreiné, parallèlement aux colonnes de guidage. Cet axe fileté est engagé dans un perçage traversant pratiqué dans chaque bloc. Dans chaque perçage traversant est disposé un écrou immobile en rotation, apte à venir en prise par son taraudage avec le filetage de la tige. Cet écrou est monté de manière escamotable et peut être dégagé de l'emprise de la vis. De part ces dispositions, le déplacement du bloc le long des colonnes peut être opéré de manière rapide en escamotant l'écrou et de manière lente et précise en ramenant l'écrou en prise avec la vis et en imprimant un mouvement de rotation à cette dernière. Selon ce document, les deux blocs ne coopèrent pas l'un avec l'autre pour définir un même logement pour recevoir le câble à dénuder et ces deux blocs bien qu'ils puissent être déplacés simultanément s'ils sont tous deux en prise avec la vis, ne peuvent cependant pas, par action sur la vis, être déplacés symétriquement par rapport à un plan médian. Sous l'effet de l'action de la vis le déplacement de ces deux blocs s'effectue dans le même sens le long des colonnes. La raison en est que les deux filetage que présente la vis ne sont pas opposés et présentent tous deux un pas orienté à droite. De même, ces dispositions ne peuvent pas assurer un positionnement symétrique des deux blocs par rapport à un plan médian, et l'escamotage de l'un ou des deux écrous interdit tout mouvement conjoint des deux blocs.

Un autre inconvénient que présentent certains outils réside dans le fait que la mise en position des blocs mâchoire sur le câble pose problème cette mise en position s'effectuant d'une manière trop lente selon les utilisateurs.

Encore un autre inconvénient commun à ces différents outils réside dans une mauvaise répartition des masses par rapport au logement du câble ce qui se traduit par un manque d'ergonomie dans l'utilisation de l'outil.

Enfin pour certains outils, les blocs mâchoire sont solidarisés les uns aux autres par trois ou quatre colonne réparties de part et d'autre du passage du câble formé dans les deux mâchoires. Cette disposition se traduit par l'impossibilité d'engager l'outil sur le câble par mouvement radial.

La présente invention a pour but de résoudre les inconvénients précédemment cités en mettant en oeuvre un outil pour le dénudage de câbles électriques comprenant un bâti sur lequel sont installés deux blocs mâchoire coopérant tous deux avec un même mécanisme de réglage de leurs positions mutuelles, l'un au moins des deux blocs étant équipé d'une rainure en Vé définissant avec l'autre bloc mâchoire un logement pour le câble à dénuder et l'un au moins des deux des blocs étant équipé d'au moins un outil de coupe, le bâti comprenant deux colonnes parallèles réunies rigidement en extrémité par deux entretoises, ces deux colonnes et ces deux entretoises formant un cadre rigide, et les deux blocs mâchoire étant montés de manière coulissante sur les deux colonnes, se caractérise essentiellement en ce que :
- les deux blocs mâchoires sont disposés de manière symétrique par rapport à un plan géométrique (P) central au bâti et orthogonal aux colonnes de ce dernier,
- les deux blocs mâchoires sont disposés tous deux d'un même côté du cadre défini par les deux colonnes et les deux entretoises,
- et le mécanisme de réglage en position des deux blocs mâchoire qui assure un positionnement symétrique des deux mâchoires par rapport au plan géométrique sus défini, comprend une tige filetée avec bouton de manoeuvre, s'étendant parallèlement aux colonnes entre les deux entretoises, ladite tige filetée étant immobile en translation et motile en rotation par rapport au bâti et comportant une première section filetée selon un pas à droite, engagée en vissage dans un taraudage traversant pratiqué dans l'un des blocs mâchoire et une seconde section filetée selon un pas à gauche et de même valeur que celle du pas de la section précédente, ladite seconde section filetée étant engagée dans un taraudage traversant pratiqué dans l'autre bloc mâchoire.

Grâce à ces caractéristiques, les masses demeurent reparties de manière symétrique de part et d'autre du plan géométrique P.

Est diminuée ainsi l'importance des efforts parasites dus à des mauvaises répartitions de masses, efforts parasites qui déséquilibrent l'outil autour du câble.

Par ailleurs le double pas que présente la tige filetée permet un déplacement rapide des deux mâchoires et par voie de conséquence une mise en place plus rapide de l'outil sur le câble.

En outre, comme les mâchoires se situent d'un seul côté du cadre, l'introduction du câble entre ces dernières peut être effectuée par mouvement radial et non plus seulement par mouvement axial.

Selon une première forme de réalisation de l'outil selon l'invention, l'un des deux blocs mâchoires est équipé d'une lame de coupe et cette dernière est configurée pour le retrait de la gaine isolante externe et de son ruban aluminium contrecollé et pour le retrait de la couche isolante et de la couche semi-conductrice interne associée.

Selon une autre caractéristique de l'outil selon cette première forme de réalisation, l'autre bloc mâchoire est équipé d'une lame de coupe destinée à la formation d'un chanfrein en bout d'isolant.

Selon une seconde forme de réalisation de l'outil selon l'invention, l'un des deux blocs mâchoire est équipé d'une lame destinée au retrait de la couche semi-conducteur externe pelable et le bloc mâchoire antagoniste est équipé d'une lame de coupe destinée au retrait de la couche semi-conducteur externe non pelable.

La présente invention à également pour objet un jeu d'outils pour la réalisation d'opérations d'apprêtement des extrémités des câbles électriques, ce jeu d'outils étant essentiellement caractérisé en ce qu'il comprend un outil selon la première forme de réalisation et un outil selon la seconde forme de réalisation.

Ainsi avec le jeu d'outils selon l'invention, deux utilisateurs peuvent travailler simultanément sur divers câbles à raccorder, le second utilisateur après que le premier ait retiré la gaine externe isolante du premier câble peut alors intervenir sur ce premier câble pour le retrait de la couche semi-conductrice. Pendant ce temps, le premier utilisateur peut intervenir sur le deuxième câble toujours pour le retrait de la couche externe isolante. Pendant que le second utilisateur intervient sur le second câble pour le retrait de la couche semi-conductrice, le premier utilisateur peut de nouveau intervenir sur le premier câble en vue cette fois du retrait de la couche isolante et ainsi de suite.

On comprend que plusieurs opérations peuvent ainsi s'effectuer de manière simultanée sur plusieurs câbles ce qui diminue la durée d'intervention.

D'autres buts, avantages, et caractéristiques de l'invention apparaîtront à la lecture de la description d'une forme préférée de réalisation, en se référant aux dessins annexés en lesquels :
- la figure 1 est une vue en perspective d'une première forme de réalisation d'un outil selon l'invention, spécifiquement destiné au retrait de la gaine isolante externe et de la couche interne.
- la figure 1a est une vue en perspective de l'outil selon un autre angle de vue,
- les figures 2 à 5 sont respectivement des vues de dessus, de face, de gauche et de droite de l'outil selon la première forme de réalisation,
- la figure 6 est une vue en coupe longitudinale du mécanisme d'ajustement de la profondeur de coupe, monté dans le bloc mâchoire correspondant,
- la figure 7 est une vue en coupe du mécanisme d'orientation angulaire de la lame de coupe monté dans le bloc mâchoire correspondant,
- la figure 8 est une vue en perspective d'un outil selon une seconde forme de réalisation, spécifiquement destiné au retrait des couches semi-conductrices pelable et des couches semi-conductrices non pelable,
- la figure 8a est une vue en perspective de l'outil selon une seconde forme de réalisation selon un autre angle de vue,
- les figures 9 à 12 sont respectivement des vues de dessus, de face, de gauche et de droite de l'outil selon la seconde forme de réalisation,
- la figure 13 est une vue en coupe longitudinale du mécanisme de réglage de la saillie de la lame coupe de la couche semi-conducteur pelable, monté dans son bloc mâchoire, la molette étant en position verrouillée
- la figure 14 montre la molette de ce mécanisme en position déverrouillée, de réglage de la saillie de la lame,
- la figure 15 montre est une vue en coupe longitudinale du mécanisme d'orientation angulaire de la lame de coupe,
- la figure 16 est une vue en coupe longitudinale du mécanisme de réglage de la profondeur de coupe de la lame de coupe destinée au retrait de la couche semi-conducteur non pelable, monté dans le bloc mâchoire correspondant,
- la figure 17 est une vue de détail en coupe montrant le blocage en translation de la vis de manoeuvre du mécanisme de réglage selon la figure 16,
- la figure 18 est une vue en coupe transversale du bloc mâchoire montrant l'organe de blocage en position de verrouillage.

Comme représenté, l'outil selon l'invention, pour le dénudage de câbles électriques comprend un bâti 1 sur lequel sont installés de manière antagoniste deux blocs mâchoires 2, 3, coopérant tous deux avec un même mécanisme 4 de réglage de leurs positions mutuelles. L'un au moins des deux blocs 2, 3 est équipé d'une rainure en Vé définissant avec l'autre bloc mâchoire un logement pour le câble à dénuder et l'un au moins des deux blocs 2, 3 est équipé d'au moins un outil de coupe qui peut être de l'un du type de ceux conçus pour entailler et/ou retirer la gaine isolante externe, la couche semi conducteur externe pelable ou non pelable, la couche isolante et la couche semi-conducteur du câble électrique, ces opérations étant effectuées par rotation et avance combinée de l'outil sur le câble.

Dans la forme préférée de réalisation, chaque bloc mâchoire 2, 3 possède une rainure en Vé.

Conformément à l'invention, le bâti 1 comprend deux colonnes 5 de guidage, parallèles, réunies rigidement en extrémité par deux entretoises 6, lesquelles en combinaison avec les deux colonnes 5 définissent un cadre rigide, indéformable, de forme rectangulaire.

Les deux blocs mâchoires 2, 3 sont montés de manière coulissante sur les deux colonnes 5 et sont disposés de manière symétrique par rapport à un plan géométrique P médian au cadre et orthogonal aux colonnes 5. L'axe du logement du câble que définissent les rainures en Vé des deux blocs mâchoires est parallèle au plan du cadre que définit le bâti.

Les deux blocs mâchoires 2, 3 possèdent sensiblement des formes et des masses sensiblement égales et les deux entretoises possèdent également des formes et des masses égales, le centre de gravité de l'outil est ramené dans le logement du câble. On diminue ainsi l'importance des efforts parasites dus à une mauvaise répartition des masses, ces efforts parasites étant une gêne pour l'utilisateur lors de l'entraînement manuel de l'outil autour du câble.

Les colonnes de guidage 5, de section droite circulaire, sont engagées dans des perçages pratiqués dans les entretoises 5 et sont immobilisées dans ces perçages par des goupilles.

L'une des colonnes de guidage 5 présente selon l'une de ses extrémités, au-delà de l'entretoise 6 correspondante, une extension radiale, formant manivelle, dotée en extrémité d'une poignée de préhension 50, sous forme de boule par exemple, montée de manière tournante sur ladite extension.

Le mécanisme de réglage 4 assure un déplacement symétrique et un positionnement symétrique des deux blocs mâchoires 2, 3 par rapport au plan P et ce quel que soit leur écartement.

Ce mécanisme de réglage 4 comprend une tige filetée 40, portant à son extrémité proximale un bouton de manoeuvre 41. Cette tige 40 s'étend parallèlement aux colonnes de guidage 5, est engagée de manière libre en rotation, par une portée lisse cylindrique qu'elle présente à distance de son extrémité proximale, dans un palier proximal monté en fixation dans un perçage traversant formé dans l'entretoise proximale 6. La tige 40 présente en extrémité distale une seconde portée lisse par laquelle elle est engagée en rotation dans un palier distal monté en fixation dans un perçage pratiqué dans l'entretoise distale 6.

La tige filetée 40 est immobilisée en translation par rapport au bâti 1 par un premier épaulement proximal formé à distance de son extrémité proximale et prévu pour venir en appui contre le palier proximal et par un épaulement distal formé à distance de sar extrémité distale et prévu pour venir en appui contre le palier distal.

En deçà de sa portée lisse proximale, la tige 40 comporte une première partie filetée prévue pour recevoir un écrou de blocage en rotation. En arrière de cette première partie filetée, est formée sur la tige 40, une seconde partie filetée prévue pour être engagée dans un taraudage borgne formé dans le bouton de manoeuvre 41. In y a lieu de remarquer que le bouton de manoeuvre 41 de la tige filetée 40 et la poignée de préhension 50 occupent l'un par rapport à l'autre deux positions opposées, distantes l'une de l'autre et que ce bouton de manoeuvre 41 avec la poignée 50 est destiné à être saisi par l'utilisateur pour la manoeuvre de l'outil dans l'action de dénudage du câble.

La tige 40 comporte une première section 401 filetée selon un pas à droite engagée en vissage dans un taraudage traversant pratiqué dans l'un des deux blocs mâchoire et une seconde section 402 filetée selon un pas à gauche engagée dans un taraudage traversant pratiqué dans l'autre bloc mâchoire, les deux sections filetées se développant de manière symétrique par rapport au plan P. Il va de soi que les deux sections filetées présentent des pas de même valeur. Préférentiellement, l'épaulement proximal est formé en extrémité proximale de la section filetée proximale et l'épaulement distal est formé en extrémité distale de la section filetée distale de la tige 40.

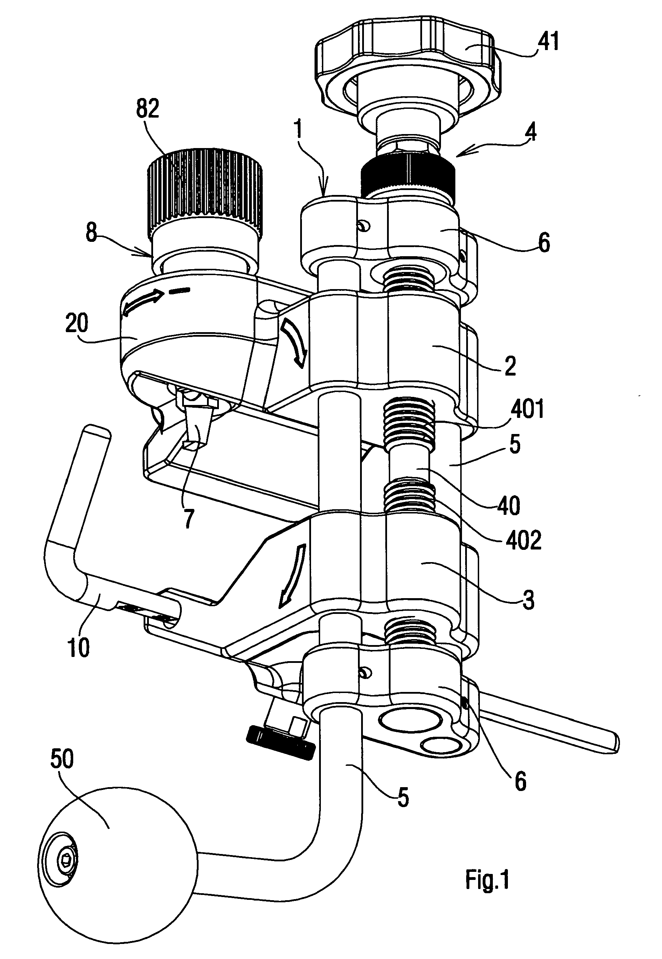

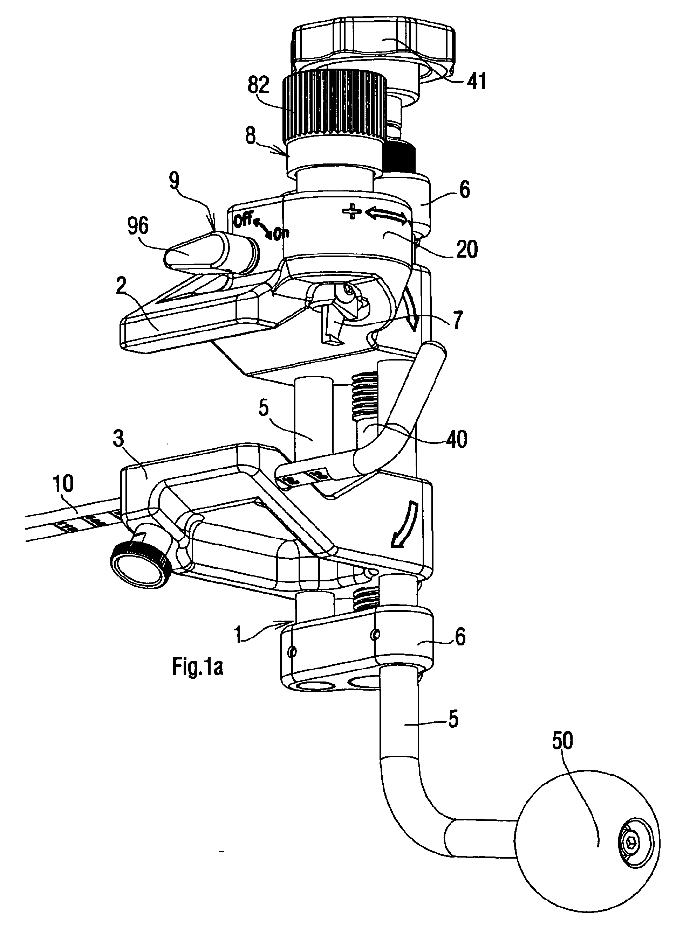

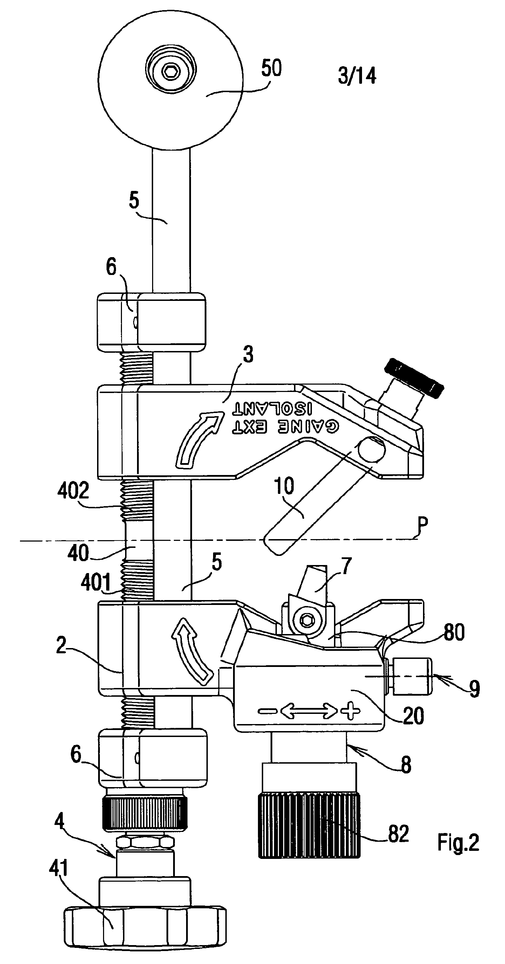

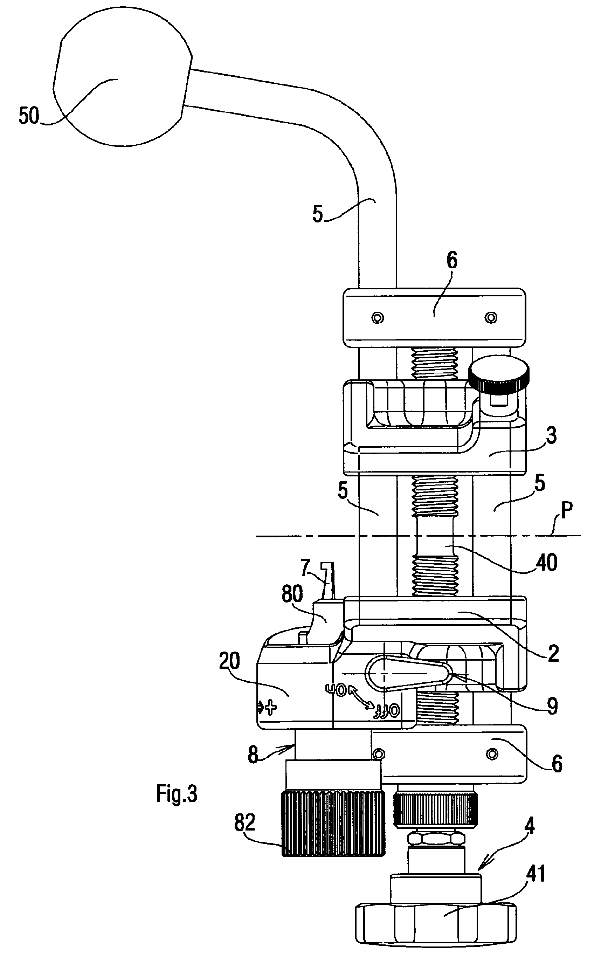

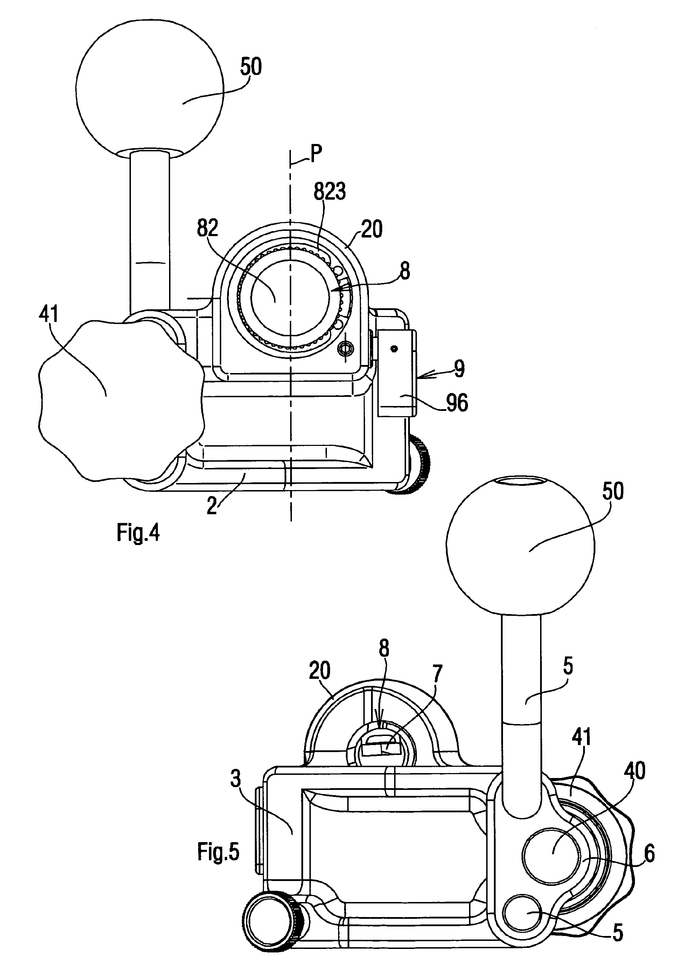

Aux figures 1 à 7 est représenté un outil selon une première forme de réalisation. L'un 2 des deux blocs mâchoire de cet outil est équipé d'une lame de coupe 7 configurée pour le retrait de la gaine isolante externe du câble et de son ruban aluminium et pour le retrait de la couche isolante interne et de la couche semi-conducteur interne associée de ce même câble. L'autre 3 bloc mâchoire qui pourra présenter un large évidement central, pourra être équipé d'une lame de coupe destinée à la formation d'un chanfrein en bout d'isolant.

La lame de coupe 7 est montée de manière amovible sur un mécanisme 8 d'ajustement de la profondeur de coupe. Ce mécanisme est monté dans un alésage formé dans un bossage latéral 20 du bloc mâchoire 2. L'alésage est formé dans le bossage 20 orthogonalement à l'axe longitudinal du logement du câble et occupe une position latérale par rapport à l'une des extrémités de la rainure.

Ce mécanisme d'ajustement 8 comprend :
- un support de lame 80 de forme cylindrique recevant en extrémité avant, de manière amovible, la lame de coupe 7 et doté en partie arrière d'une section filetée,
- un fourreau de guidage 81, substantiellement de forme cylindrique, doté selon son axe géométrique central longitudinal, d'un alésage cylindrique interne traversant, recevant de manière libre en translation et fixe en rotation, le support de lame 80, ledit support de lame 80 traversant de part en part le fourreau 81 et ledit fourreau de guidage 81 étant engagé de manière libre en rotation dans l'alésage traversant du bossage 20,
- une molette de réglage 82 dotée d'un taraudage axial prévu pour recevoir la section filetée du support de lame 80, ladite molette 82 étant engagée en partie dans l'alésage traversant du bossage, et étant immobilisée en translation dans ledit alésage tout en étant libre en rotation dans ce dernier, de sorte que par rotation de la molette 82 dans un sens ou dans l'autre, le support de lame 80 et la lame de coupe 7 soient déplacés en translation et la lame 7 soit amenée à la position requise de saillie par rapport au logement du câble.

La lame de coupe 7, qui se présente sous la forme d'une plaquette, est introduite dans logement formé en extrémité avant du support de lame 80 et est fixée dans ce logement par une vis. Cette lame 7 est dotée d'un talon d'appui qui vient glisser sur la couche semi-conducteur externe lors de la coupe de la gaine isolante ou sur l'âme conductrice centrale, lors de la coupe de la couche isolante.

Le support de lame 80 est doté d'une lumière oblongue 800 traversante, diamétrale, dans laquelle est engagée une goupille traversante 810 engagée par ses deux extrémités dans deux perçages traversants axialement alignés formés dans la paroi du fourreau de guidage 81. Cette disposition assure l'immobilisation en rotation du support de lame 80 dans le fourreau de guidage 81 tout en autorisant une translation d'amplitude limitée dudit support 80 dans ledit fourreau 81.

Préférentiellement, la molette de réglage 82 est associée à un moyen d'indexation des diverses positions angulaires qu'elle est assignée à prendre et ce moyen assurant par voie de conséquence l'indexation des différentes valeurs de saillie correspondantes de la lame de coupe par rapport au logement du câble.

Dans la pratique, ce moyen d'indexation est constitué par une collerette d'extrémité 820 formée sur la molette et dotée d'une série d'empreintes en creux, au nombre de douze par exemple, angulairement réparties de manière égale sur la circonférence d'un cercle centré sur l'axe de rotation de la molette 82 et par une bille 821 sollicitée vers la collerette 820 sous l'effet de l'action d'un organe élastique 822 afin de s'engager dans l'une des empreintes de la collerette, ladite bille 821 et ledit organe élastique étant montés dans un perçage borgne pratiqué dans le bossage latéral 20 du bloc mâchoire.

Toujours selon la forme préférée d'exécution, la collerette 820 de la molette 82 est engagée dans un lamage 200 pratiqué dans l'alésage du bossage 20, et le perçage borgne prévu pour recevoir la bille 821 et son organe élastique 822, débouche dans la face plane constituant le fond de ce lamage 200.

En arrière de la position occupée par la collerette 820 dans le lamage 200, est formée dans ce dernier une gorge circulaire dans laquelle est engagé un anneau élastique 823. Cette disposition assure l'immobilisation en translation dans l'alésage du bossage latéral, du mécanisme d'ajustement de la profondeur de coupe.

La molette de réglage 82 pourra être dotée d'un repère et le bossage 20 autour de l'alésage pourra présenter une échelle graduée en regard de laquelle sera situé le repère. Cette disposition est un moyen avantageux d'indication de la valeur de la saillie de la lame de coupe dans le logement du câble.

Au mécanisme 8 d'ajustement de la profondeur de coupe de la lame 7 est associé un mécanisme 9 d'orientation de la lame de coupe 7, ce mécanisme d'orientation agissant sur le mécanisme de réglage 8 afin de l'amener, par pivotement dans l'alésage du bossage latéral 20, d'une position de coupe en hélice vers une position de coupe circulaire et inversement.

En vue du dénudage, la lame 7 est disposée en position de coupe en hélice. Après réalisation de la coupe en hélice sur longueur de dénudage désirée, cette lame 7 est disposée en position de coupe circulaire et par rotation de l'outil sur un ou plusieurs tours, la partie de gaine externe ou la partie de couche isolante interne découpée en hélice se trouve séparée du câble.

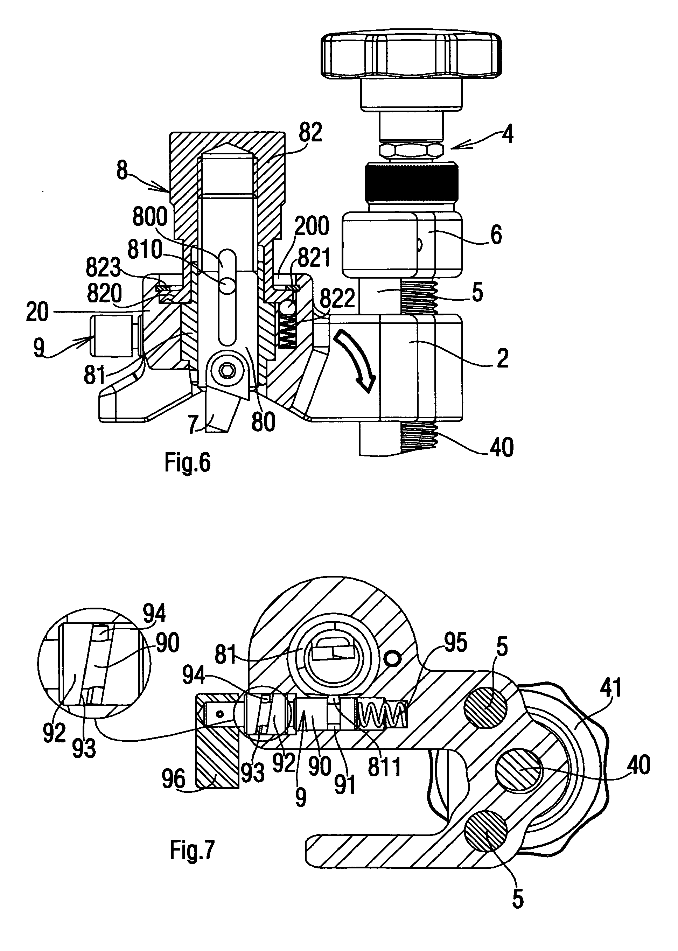

Selon la forme préférée de réalisation (fig. 7), le mécanisme d'orientation 9 de la lame de coupe 7 agit sur une saillie longitudinale 811 formée sur un méplat longitudinal du fourreau de guidage 81 et comprend un axe de manoeuvre 90 engagé en rotation dans un perçage borgne pratiqué dans le bossage latéral 20 du bloc mâchoire 2 et débouchant tangentiellement dans l'alésage dudit bossage. L'axe de manoeuvre 90 est pourvu d'une gorge circulaire 91 dans laquelle est engagée la saillie longitudinale 811 du fourreau de guidage 81. Cet axe de manoeuvre 90, à distance de la gorge 91 est engagé de manière libre en rotation et en translation dans une bague 92 immobilisée dans le perçage borgne tangentiel. Cette bague 92 comporte une rainure traversante 93 sous forme d'hélice, formant came, dans laquelle est engagé un doigt saillant radial 94 fixé à l'axe de manoeuvre 90, ledit axe de manoeuvre 90, extérieurement au perçage qui le reçoit, recevant un bouton de manoeuvre 96. La rainure en hélice 93 que comporte la bague 92 constitue une came contre laquelle vient glisser le doigt radial 93 de l'axe de manoeuvre 90. Cette came, lorsque l'axe de manoeuvre 90 est entraîné en rotation, en agissant sur le doigt radial 93, force la translation axiale de l'axe de manoeuvre dans le perçage qui le reçoit, ce qui se traduit par le pivotement, dans l'alésage du bossage latéral 20, du mécanisme d'ajustement 8 de la profondeur de coupe de la lame.

De préférence un ressort 95 à spires non jointives est monté en compression entre l'axe de manoeuvre 90 et le fond du perçage borgne qui reçoit le dit axe. Cette disposition permet de maintenir le doigt saillant 93 en appui contre la came formée par la rainure 93.

Préférentiellement à chaque extrémité de la rainure 93 sera formé un dégagement dans lequel, par recul de l'axe de manoeuvre 90 sous l'effet de l'action du ressort 95, est engagé le doigt saillant 93. L'avantage de cette disposition est de former deux « points durs » matérialisant les deux positions angulaires possibles de la lame de coupe. Par ailleurs ces deux points durs s'opposent efficacement à la manoeuvre inopinée de l'axe de manoeuvre 90.

Pour limiter la longueur de dénudage, l'un des deux blocs mâchoire est doté d'une butée réglable 10 formée d'une tige coudée en extrémité et engagée de manière réglable en position axiale dans un perçage traversant dudit bloc. Par sa partie coudée, la butée, au cours du dénudage, est destinée à venir contre l'extrémité du câble afin de limiter ainsi la longueur de dénudage.

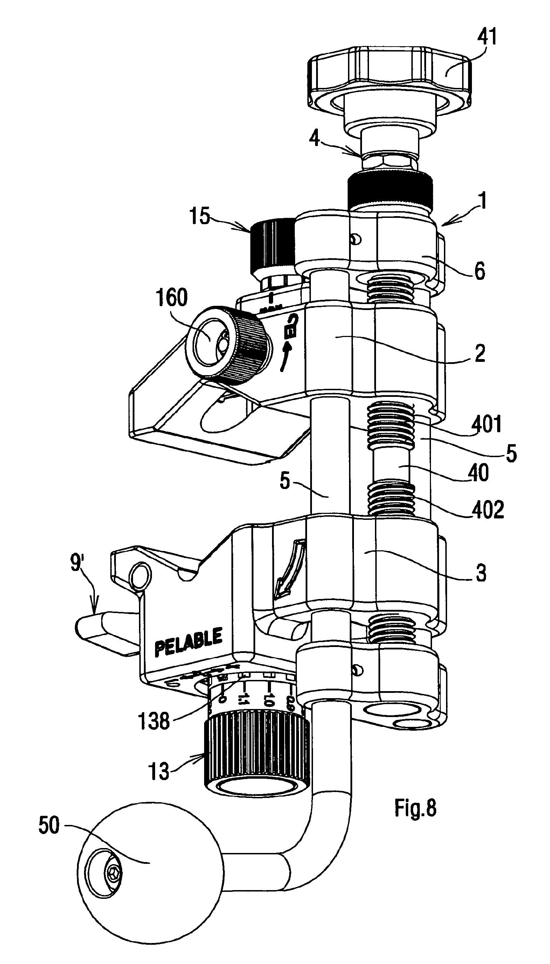

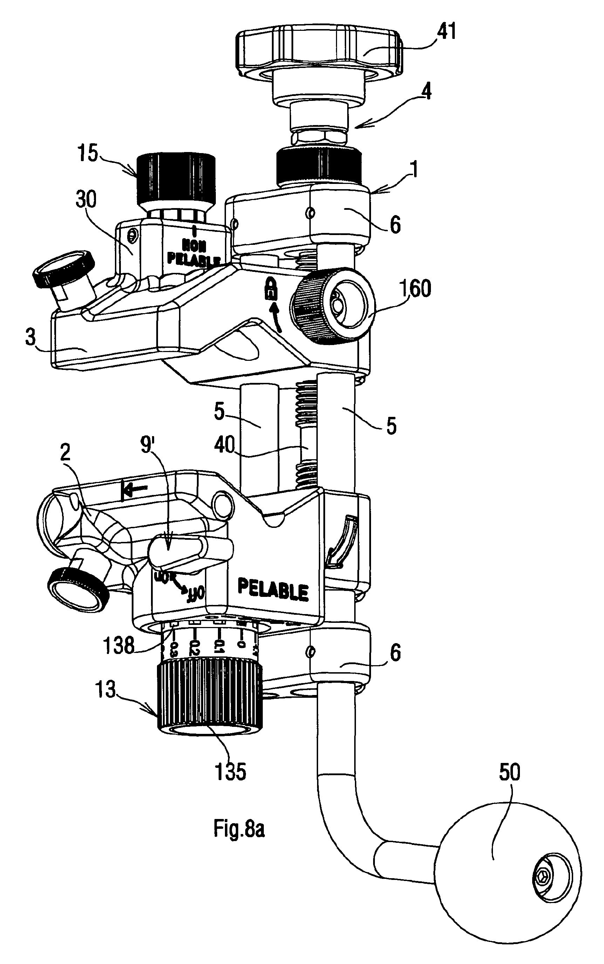

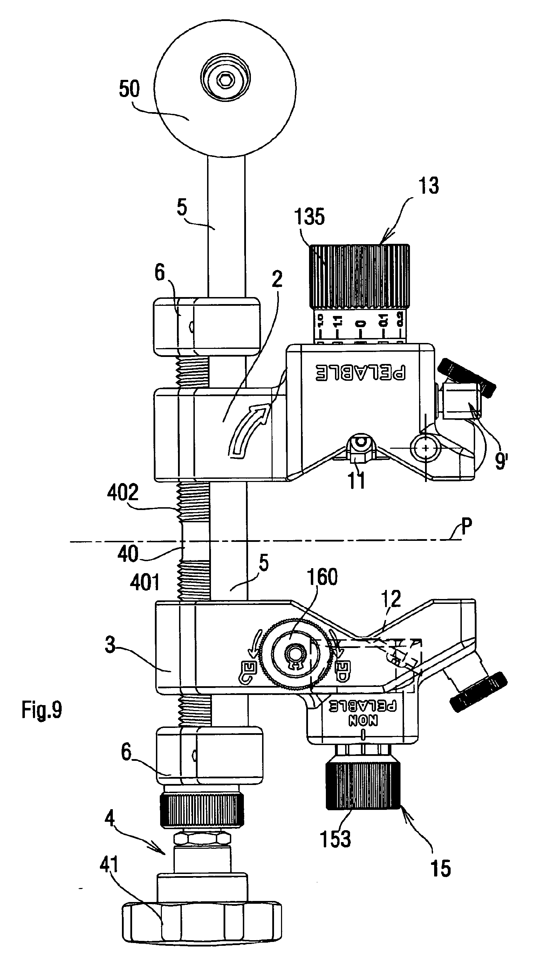

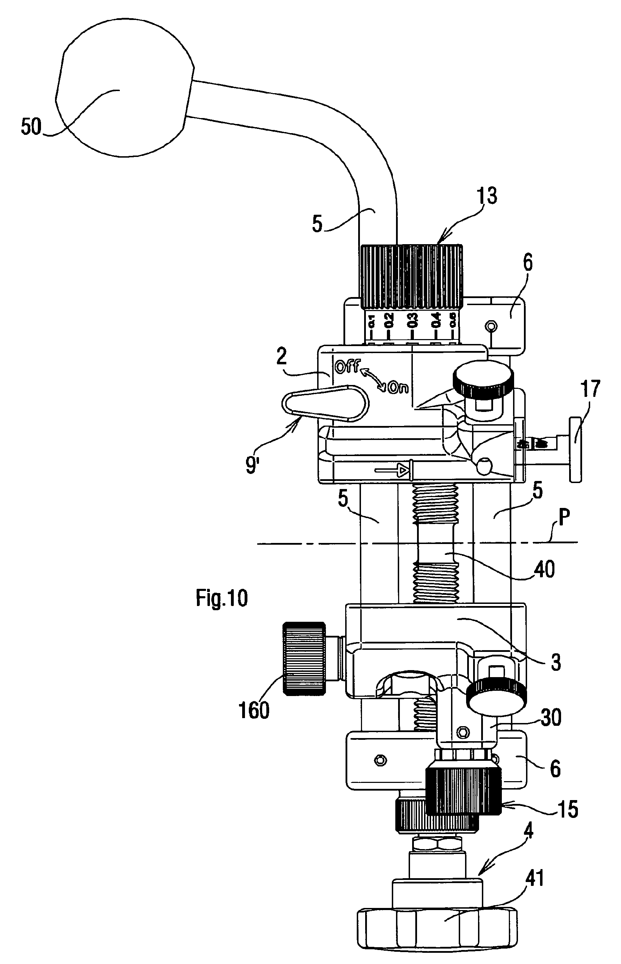

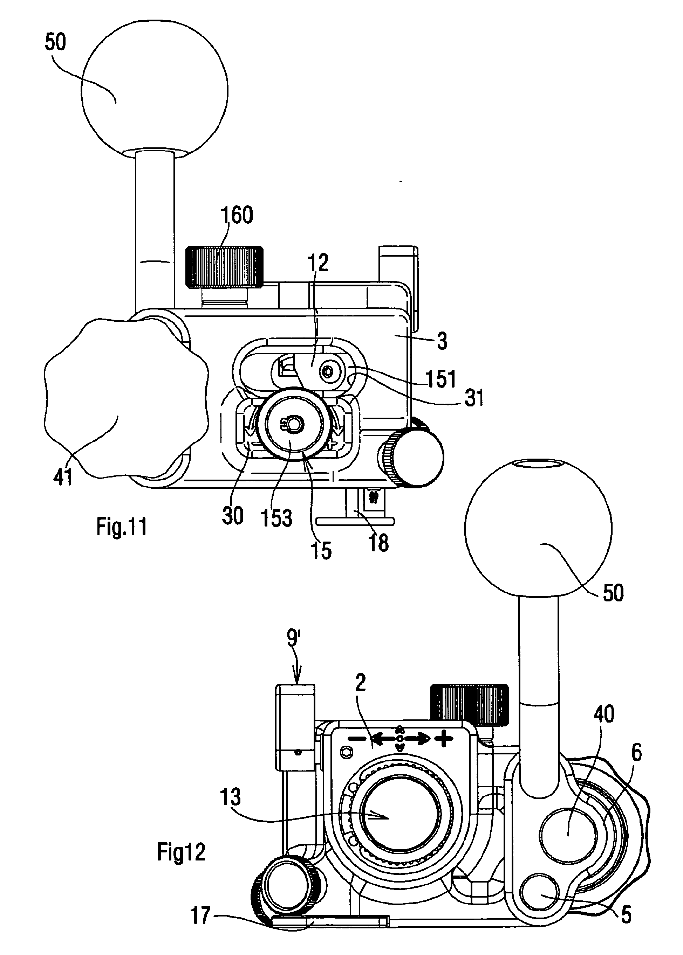

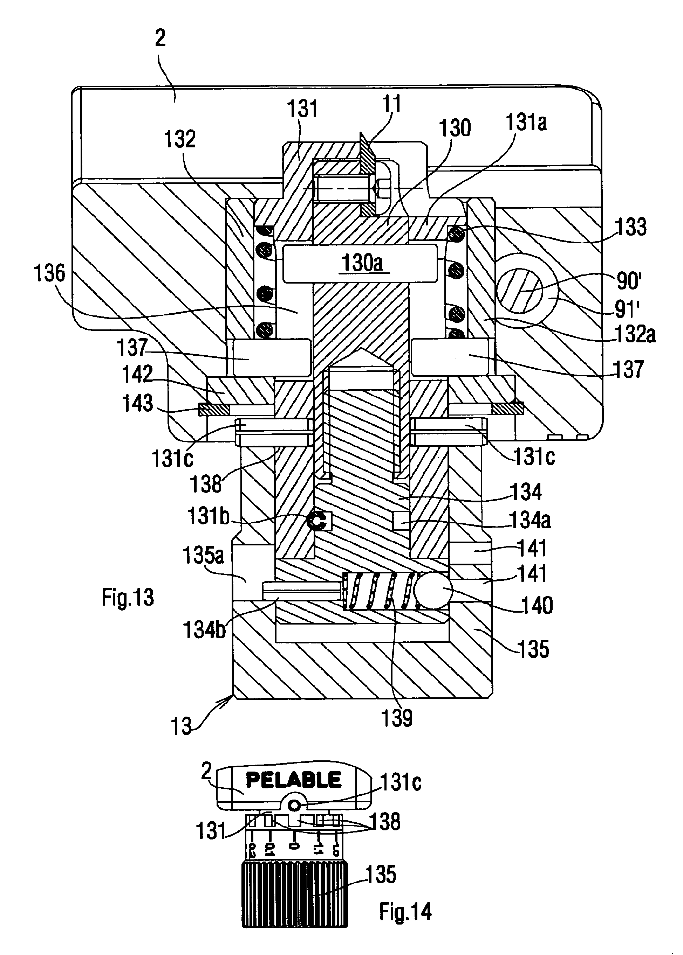

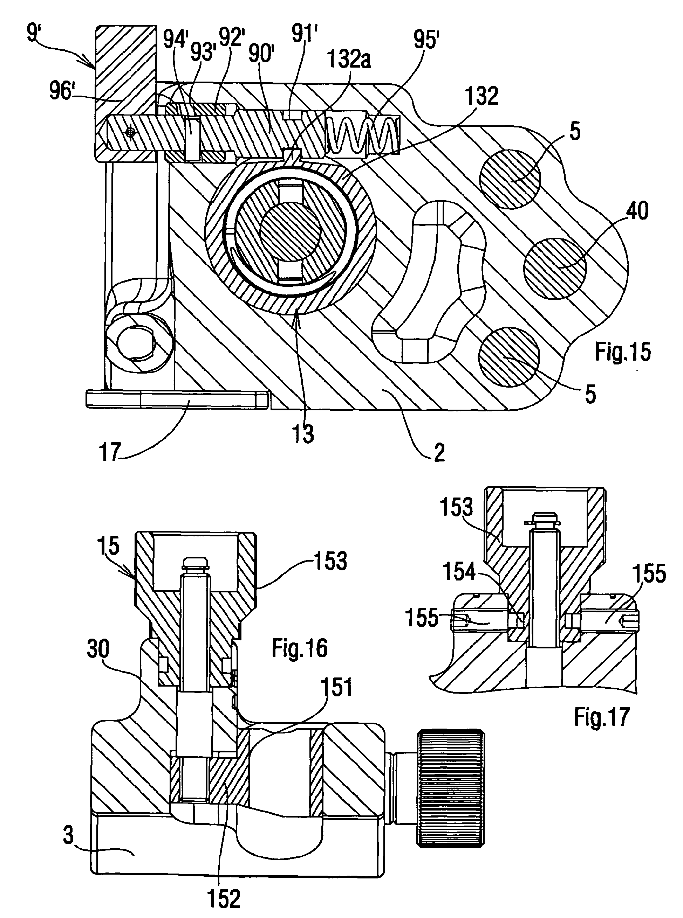

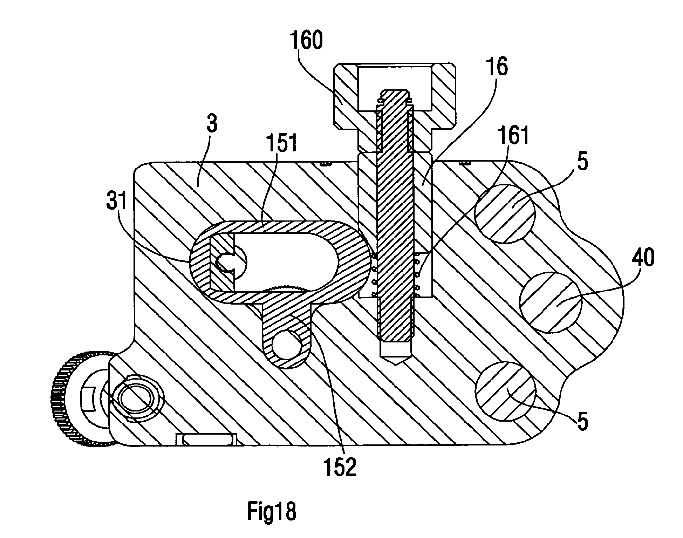

Aux figures 8 à 18 est représenté un outil selon une seconde forme de réalisation. L'un 2 des deux blocs mâchoires de cet outil est équipé d'une lame de coupe 11 configurée pour le retrait de la couche semi-conducteur externe pelable et l'autre bloc mâchoire est équipé d'une lame de coupe 12 configurée pour le retrait de la couche semi-conducteur externe non pelable. Ces deux lames de coupe 11, 12 sont destinées à former saillie dans la rainure en Vé de leur bloc mâchoire respectif et ce à distance des deux extrémités de ladite rainure. En raison de cette disposition, le câble, de part et d'autre de la lame 11 ou 12 se trouve parfaitement maintenu centré dans le logement par les rainures en Vé formant ce dernier, ce qui est garant d'une coupe de profondeur uniforme. De plus est écarté le risque de voir la couche isolante endommagée par entaillage trop profond.

Il est évident que seule la lame de coupe prévue pour l'opération à conduire sera amenée en position active de coupe, l'autre lame de coupe étant maintenue dans une position inactive selon laquelle elle est écartée du câble.

Préférentiellement, la lame de coupe 11, configurée pour le retrait de la couche semi-conducteur pelable, est montée de manière amovible sur un mécanisme 13 d'ajustement de la profondeur de coupe, monté dans un alésage traversant formé dans le bloc mâchoire correspondant 2, et ce orthogonalement à l'axe longitudinal du logement du câble, ledit alésage débouchant dans la rainure en Vé dudit bloc mâchoire,

Ce mécanisme d'ajustement 13 comprend :
- un support de lame 130, de forme cylindrique, recevant en extrémité avant la lame de coupe 11, et doté en extrémité arrière d'un taraudage borgne,
- un premier fourreau de guidage 131 doté d'un alésage cylindrique interne, dans lequel est monté de manière libre en translation et fixe en rotation le support de lame 130,
- un second fourreau de guidage 132, de forme cylindrique, doté d'un alésage traversant cylindrique dans lequel est monté de manière fixe en rotation et libre en translation le premier fourreau de guidage 131, ledit second fourreau de guidage 132 étant monté de manière fixe en translation et libre en rotation dans l'alésage traversant du bloc mâchoire correspondant,
- un organe élastique 133 agissant simultanément sur le premier fourreau de guidage 131 et le second fourreau de guidage 132 et sollicitant ces derniers dans le sens de leur écartement mutuel,
- une vis de manoeuvre 134 engagée par sa tige filetée dans le taraudage du support de lame 130 et bloquée en translation dans le premier fourreau de guidage 131,
- un bouton de manoeuvre 135 accouplé à la tête de la vis de manoeuvre 134.

Ainsi par rotation du bouton de manoeuvre 134 est réglée la saillie de la lame de coupe 11 par rapport à l'extrémité avant du premier fourreau de guidage 131.

Grâce à ces dispositions, la saillie de la lame de coupe 11 est réglable essentiellement par rapport au premier fourreau de guidage 131 lequel par sa face avant, sous l'effet de l'action de l'organe élastique 133 est destiné à venir en appui contre le câble. Ainsi le diamètre du câble n'interfère plus sur la profondeur de coupe dans le câble, cette dernière ne dépendant plus que de la valeur de la saillie de la lame de coupe par rapport à la face avant du premier fourreau de guidage 131. Cette valeur de saillie est déterminée par le degré d'enfoncement de la tige de la vis 134 dans le taraudage du support de lame 130.

La lame de coupe 11, sous forme de plaquette, sera fixée de manière amovible par vis dans un logement formé en extrémité du support de lame 130.

Selon la forme préférée de réalisation, le premier fourreau de guidage 131 est doté d'une lumière traversante 136, diamétrale, de forme oblongue, et le support de lame de coupe 130 est doté d'au moins un pion radial 130a engagé dans la lumière traversante 136 du premier fourreau de guidage 130.

Cette disposition a pour effet d'assurer l'immobilisation en rotation du support de lame 130 dans le premier fourreau de guidage 131 et de limiter l'amplitude du déplacement en translation du support de lame 130 dans le premier fourreau 131.

Le premier fourreau de guidage 131 comporte une collerette avant 131 a et le second fourreau 132, en saillie dans son alésage interne, présente au moins un pion radial 137 engagé dans la lumière traversante 136 du premier fourreau 131, l'organe élastique 133 constitué par un ressort à spires étant monté en compression autour du premier fourreau 131 entre la collerette 131 a de ce dernier et le pion radial 137.

Ces dispositions assurent l'immobilisation en rotation du premier fourreau de guidage 131 et du second fourreau de guidage 132 l'un par rapport à l'autre, mais autorise le déplacement limité en translation du premier fourreau 131 et du support de lame 130 dans l'alésage du second fourreau 132 et ce à l'encontre de l'action de l'organe élastique 133. Préférentiellement, le second fourreau de guidage présente deux pions radiaux diamétralement opposés.

La tige de la vis de manoeuvre 134, en avant de sa tête, présente une gorge circulaire 134a dans laquelle est engagée tangentiellement une goupille 131 b engagée par ailleurs dans deux perçages traversants pratiqués de manière axialement alignés dans le premier fourreau 131. Cette disposition assure l'immobilisation en translation de la vis de manoeuvre 134 dans le premier fourreau de guidage 131.

Le bouton de manoeuvre 135 présente un alésage cylindrique interne et vient coiffer par l'alésage interne, la tête de la vis de manoeuvre 134. La tête de cette vis 134 est dotée d'un doigt radial saillant 134b engagé dans une lumière oblongue 135a pratiquée dans la paroi du bouton de manoeuvre 135, ladite lumière s'étendant selon une génératrice de l'alésage du bouton de manoeuvre. En raison de cette disposition, le bouton de manoeuvre 135 et la vis 134 sont accouplés l'un à l'autre.

En combinaison avec ces caractéristiques, le bouton de manoeuvre 135 présente en avant une série de crans d'indexation 138 formant créneaux et le premier fourreau de guidage 131 présente au moins un doigt saillant 131c, le bouton de manoeuvre 135 par engagement de l'un de ses crans 138 autour du doigt saillant 131 c étant immobilisé en rotation.

En vue du réglage de la saillie de la lame 11, le bouton de manoeuvre, par déplacement axial, est écarté par ses crans 138 du pion saillant 131c et ensuite manoeuvré en rotation. La vis 134, en raison de son accouplement au bouton de manoeuvre 135, est entraînée en rotation ce qui induit le mouvement de translation du support de lame de coupe 130 dans le premier fourreau 131. Après réglage de la saillie de la lame de coupe par rapport à la face avant du premier fourreau de guidage 131, le bouton de manoeuvre 135 par l'un de ses crans 138 est engagé vers le doigt saillant 131c pour être immobilisé en rotation ce qui écarte le risque de toute modification inopinée du réglage opéré.

Préférentiellement, la tête de la vis 134 est dotée d'un perçage radial dans lequel sont introduits un ressort à spire 139 et une bille d'indexation 140 et la paroi du bouton de manoeuvre 135 présente deux perçages radiaux 141 d'indexation distants l'un de l'autre et formés selon une même génératrice.

En position d'engagement de l'un des crans 138 autour du pion de blocage 131c, l'un des perçages d'indexation 141 vient en regard de la bille 140 pour recevoir cette dernière, et en position de dégagement, l'autre perçage d'indexation 141 vient en regard de la bille 140 pour recevoir cette dernière. Sont constitués ainsi deux points durs matérialisant une position de verrouillage du réglage et une position de déverrouillage.

Le bouton de manoeuvre 135 pourra comporter une échelle graduée, le bloc mâchoire 2 en regard de cette échelle graduée pourra comporter un repère. Cette disposition constitue un moyen d'indication, par lecture directe de l'échelle graduée, de la valeur de la saillie de la lame de coupe par rapport à la face avant du premier fourreau de guidage 131.

Le second fourreau de guidage 132 est doté d'une collerette arrière 142 et l'alésage traversant du bloc présente un lamage dans lequel est engagée la collerette arrière. Le mécanisme d'ajustement de la profondeur de coupe est immobilisé dans l'alésage du bloc mâchoire par un anneau élastique 143 engagé dans une rainure formée dans le lamage en arrière de la position de la collerette 142.

Préférentiellement, est prévu un mécanisme d'orientation angulaire 9' de la lame de coupe 11 par pivotement du mécanisme de réglage 13 dans l'alésage du bloc mâchoire entre une position de coupe en hélice de la lame et une position de coupe circulaire. Ce mécanisme d'orientation angulaire 9' est identique au mécanisme d'orientation angulaire 9 que comporte l'outil selon la première forme de réalisation, les mêmes signes de référence mais affecté du symbole « prime » seront utilisés pour le décrire.

Selon la forme préférée de réalisation, le mécanisme d'orientation 9' agit sur une saillie longitudinale 132a formée sur un méplat longitudinal du second fourreau de guidage 132 et comprend un axe de manoeuvre 90' engagé en rotation dans un perçage borgne pratiqué dans le bloc mâchoire 2 et débouchant tangentiellement dans l'alésage de ce dernier. Cet axe de manoeuvre 90' est pourvu d'une gorge circulaire 91' dans laquelle est engagée la saillie longitudinale 132a du second fourreau de guidage 132. Cet axe de manoeuvre 90', à distance de la gorge 91' est engagé de manière libre en rotation et en translation dans une bague 92' immobilisée dans le perçage borgne tangentiel. Cette bague 92' comporte une rainure traversante 93' sous forme d'hélice, formant came, dans laquelle est engagé un doigt saillant radial 93' fixé à l'axe de manoeuvre 90', ledit axe de manoeuvre 90', extérieurement au perçage qui le reçoit, recevant un bouton de manoeuvre 96'. La rainure en hélice 93' que comporte la bague 92' constitue une came contre laquelle vient glisser le doigt radial 93' de l'axe de manoeuvre 90'. Cette came, lorsque l'axe de manoeuvre 90' est entraîné en rotation, en agissant sur le doigt radial 94' force la translation axiale de l'axe de manoeuvre dans le perçage qui le reçoit, ce qui se traduit par le pivotement du mécanisme de réglage 13, dans l'alésage du bloc mâchoire.

De préférence un ressort 95' à spires non jointives est monté en compression entre l'axe de manoeuvre 90' et le fond du perçage borgne qui reçoit le dit axe. Cette disposition permet de maintenir le doigt saillant 93' en appui contre la came formée par la rainure 93'. Préférentiellement à chaque extrémité de la rainure 93' sera formé un dégagement dans lequel, par recul de l'axe de manoeuvre 90' sous l'effet de l'action du ressort 95', est engagé le doigt saillant 94'. L'avantage de cette disposition est de former deux « points durs » matérialisant les deux positions angulaires possibles de la lame de coupe 11. Par ailleurs ces deux points durs s'opposent efficacement à la manoeuvre inopinée de l'axe de manoeuvre 90'.

La lame de coupe 12, configurée pour le retrait de la couche semi-conducteur non pelable, portée par le second bloc mâchoire 3, est montée de manière amovible sur un mécanisme 15 d'ajustement de la profondeur de coupe. Ce mécanisme comprend un support de lame 151 recevant de manière amovible la lame de coupe 12 et présentant une section droite substantiellement de forme oblongue. Ce support 151 est engagé avec possibilité de coulissement dans un perçage traversant 31 pratiqué dans le bloc de mâchoire 3 correspondant et débouchant dans la rainure en Vé. Ce support de lame 151 est doté d'un taraudage, pratiqué dans un bossage longiligne 152 qu'il présente en partie inférieure. Ce bossage longiligne 152 est engagé dans une gorge pratiquée dans le bloc mâchoire de manière débouchante dans la rainure en Vé et dans le perçage traversant. Une vis de manoeuvre 153 est engagée par sa tige filetée d'abord dans un perçage traversant pratiqué dans un bossage arrière 30 du bloc mâchoire 3 et ensuite dans le taraudage du support de lame 151, ladite vis 153 étant bloquée en translation par rapport au bloc mâchoire 3.

La lame de coupe 12 se présente sous la forme d'une plaquette. Cette lame de coupe est engagée dans un logement pratiqué dans le support de lame 151 et est fixée de manière amovible par vis dans ce logement.

La vis 153 à proximité de sa tête, sur sa tige, présente une gorge circulaire 154 dans laquelle est engagée au moins une vis téton 155 engagée dans un taraudage radial pratiqué dans le bossage 30.

La vis 153 pourra présenter une échelle graduée et le bossage arrière 30 pourra comporter un repère. Cette disposition constituera un moyen d'indication par lecture directe, de la valeur de la saillie de la lame de coupe 12, dans le logement du câble.

Préférentiellement le second bloc mâchoire 3 est doté d'un organe 16 de blocage en translation du support de lame 151. Cet organe de blocage 16 peut occuper une position de déverrouillage selon laquelle il est écarté du support de lame 151 et une position de verrouillage selon laquelle il est appliqué contre le support de lame 151 pour interdire le mouvement de ce dernier. Cet organe de blocage 16 est monté en coulissement dans un alésage formé dans le bloc mâchoire 3 et débouchant tangentiellement dans le perçage de guidage du support de lame 151, ledit organe de blocage 16 étant doté d'un perçage traversant dans lequel est engagée la tige d'une vis 160 engagée dans un taraudage formé dans le bloc mâchoire. De plus est prévu un organe élastique 161 qui sollicite l'organe de blocage 16 vers la tête de la vis 161.

Par vissage, la tête de la vis 160 applique l'organe de blocage 16 contre le support de lame 151 et lors du dévissage de la vis 160, l'organe de blocage 16 est amené vers sa position de déverrouillage sous l'effet de l'action de l'organe élastique 161 qui le maintien en appui contre la tête de la vis.

Cet organe élastique 161 est constitué par un ressort à spires monté autour de la vis, en compression entre l'organe de blocage 16 et le fond de l'alésage recevant ce dit organe.

Enfin les deux blocs mâchoire 2, 3 sont dotés chacun d'une butée réglable 17, 18 pour limiter la longueur de coupe, chaque butée 17, 18 étant constituée par une plaquette plane portée de manière transversale au logement du câble par un axe support engagé de manière coulissante dans un perçage pratiqué dans le bloc mâchoire correspondant, ledit axe coopérant dans ledit alésage avec un mécanisme d'indexation à bille.

Il va de soi que la présente invention peut recevoir tous aménagements et variantes du domaine des équivalents techniques sans pour autant sortir du cadre du présent brevet.

## Revendications

1. Outil pour le dénudage de câbles électriques comprenant un bâti (1) sur lequel sont installés deux blocs mâchoire (2, 3) coopérant tous deux avec un même mécanisme (4) de réglage de leurs positions mutuelles, l'un au moins des deux blocs étant équipé d'une rainure en Vé définissant avec l'autre bloc mâchoire un logement pour le câble à dénuder et l'un au moins des deux des blocs étant équipé d'au moins un outil de coupe, le bâti (1) comprenant deux colonnes parallèles (5) réunies rigidement en extrémité par deux entretoises (6), ces deux colonnes (5) et ces deux entretoises (6) formant un cadre rigide, et les deux blocs mâchoire (2,3) étant montés de manière coulissante sur les deux colonnes (5), **caractérisé en ce que** :
- les deux blocs mâchoires sont disposés de manière symétrique par rapport à un plan géométrique (P) central au bâti et orthogonal aux colonnes (5) de ce dernier,
- les deux blocs mâchoires (2, 3) sont disposés tous deux d'un même côté du cadre défini par les deux colonnes (5) et les deux entretoises (6),
- et le mécanisme (4) de réglage en position des deux blocs mâchoire qui assure un positionnement symétrique des deux mâchoires par rapport au plan géométrique sus défini, comprend une tige filetée (40) avec bouton de manoeuvre, (41) s'étendant parallèlement aux colonnes (5) entre les deux entretoises (6), ladite tige filetée (40) étant immobile en translation et motile en rotation par rapport au bâti (1) et comportant une première section (401) filetée selon un pas à droite, engagée en vissage dans un taraudage traversant pratiqué dans l'un des blocs mâchoire (2, 3) et une seconde section (402) filetée selon un pas à gauche et de même valeur que celle du pas de la section précédente, ladite seconde section filetée (402) étant engagée dans un taraudage traversant pratiqué dans l'autre bloc mâchoire (2, 3).

2. Outil selon la revendication 1 **caractérisé en ce que** l'un (2) des deux blocs mâchoire (2, 3) est équipé d'une lame de coupe (7) et que cette lame de coupe (7) est configurée pour le retrait de la gaine isolante externe du câble et son ruban aluminium et pour le retrait de la couche isolante du câble et de la couche semi-conductrice interne associée.

3. Outil selon la revendication 2, **caractérisé en ce que** l'autre bloc mâchoire est équipé d'une lame de coupe destinée à la formation d'un chanfrein en bout d'isolant.

4. Outil selon la revendication 2 ou la revendication 3, **caractérisé en ce que** la lame de coupe configurée pour le retrait de la gaine isolante externe et de son ruban aluminium et pour le retrait de la couche isolante avec la couche semi conductrice interne est montée de manière amovible sur un mécanisme (8) d'ajustement de la profondeur de coupe comprenant :
- un support de lame (80) de forme cylindrique recevant en extrémité avant, de manière amovible, la lame de coupe (7), et doté en partie arrière d'une section filetée,
- un fourreau de guidage (81), substantiellement de forme cylindrique, doté selon son axe géométrique central longitudinal, d'un alésage cylindrique interne traversant, recevant de manière libre en translation et fixe en rotation, le support de lame (80), ledit support de lame (80) traversant de part en part le fourreau de guidage (81) et ledit fourreau de guidage (81) étant engagé de manière libre en rotation dans l'alésage traversant d'un bossage (20) formé sur le bloc mâchoire (2) correspondant et s'étendant latéralement à la rainure en Vé de ce bloc mâchoire,
- une molette de réglage (82) dotée d'un taraudage axial prévu pour recevoir la section filetée du support de lame (80), ladite molette étant engagée en partie dans l'alésage traversant du bossage (20), et étant immobilisée en translation dans ledit alésage et libre en rotation dans ce dernier, de sorte que par rotation de la molette (82) dans un sens ou dans l'autre, le support de lame (80) et la lame de coupe (7) soient déplacés en translation et la lame (7) soit amenée à la position requise de saillie par rapport au logement du câble.

5. Outil selon la revendication 4, **caractérisé en ce que** la molette de réglage (82) est associée à un moyen d'indexation des diverses positions angulaires qu'elle est assignée à prendre et par voie de conséquence d'indexation des différentes valeurs de saillie correspondantes de la lame de coupe par rapport au logement du câble.

6. Outil selon la revendication 5, **caractérisé en ce que** le moyen d'indexation associé à la molette (82) de réglage est constitué par une collerette d'extrémité (820) formée sur la molette (82) et dotée d'une série d'empreintes en creux, angulairement réparties de manière égale sur la circonférence d'un cercle centré sur l'axe de rotation de la molette (82) et par une bille (820) sollicitée vers la collerette sous l'effet de l'action d'un organe élastique afin de s'engager dans l'une des empreintes de la collerette (820), ladite bille (821) et ledit organe élastique (822)étant montés dans un perçage borgne pratiqué dans le bossage (20).

7. Outil selon la revendication 6, **caractérisé en ce que** la collerette (820) de la molette (82) est engagée dans un lamage (200) pratiqué dans l'alésage du bossage (20), que le perçage borgne prévu pour recevoir la bille (821) et son organe élastique (822) débouche dans la face plane constituant le fond de ce lamage (200) et qu'en arrière de la position occupée par la collerette (820) dans le lamage (200), est formée dans ce dernier une gorge circulaire dans laquelle est engagé un anneau élastique (823) assurant l'immobilisation en translation dans l'alésage (200) du bossage latéral, du mécanisme (8) d'ajustement de la profondeur de coupe.

8. Outil selon l'une quelconque des revendications 4, à 7, **caractérisé en ce que** le support de lame de coupe est doté d'une lumière oblongue (800) traversante, diamétrale, dans laquelle est engagée une goupille traversante engagée par ses deux extrémités dans deux perçages traversants, axialement alignés, formés dans la paroi du fourreau.

9. Outil selon l'une quelconque des revendications 4 à 8, **caractérisé par** un mécanisme (9) d'orientation angulaire de la lame de coupe (7), ce mécanisme d'orientation (9) agissant sur le mécanisme de réglage (8) afin de l'amener, par pivotement dans l'alésage du bossage latéral (20), d'une position de coupe en hélice vers une position de coupe circulaire et inversement.

10. Outil selon la revendication 9, **caractérisé en ce que** le mécanisme d'orientation (9) de la lame de coupe agit sur une saillie longitudinale (811) formée sur un méplat longitudinal du fourreau de guidage (81) et comprend un axe de manoeuvre (90) engagé en rotation dans un perçage borgne pratiqué dans le bossage latéral (20) et débouchant tangentiellement dans l'alésage de ce dernier, ledit axe de manoeuvre (90) étant pourvu d'une gorge circulaire (91) dans laquelle est engagée la saillie longitudinale (811) du fourreau de guidage (81), ledit axe de manoeuvre (90), à distance de la gorge (91) étant engagé dans une bague (92) immobilisée dans le perçage borgne tangentiel, ladite bague comportant une rainure traversante (93) sous forme d'hélice, formant came, dans laquelle est engagée un doigt saillant radial (94) fixé à l'axe de manoeuvre (90), ledit axe de manoeuvre, extérieurement au perçage qui le reçoit, recevant un bouton de manoeuvre (96).

11. Outil selon la revendication 10, **caractérisé par** un ressort à spires non jointives (95) monté en compression entre l'axe de manoeuvre (90) et le fond du perçage tangentiel borgne qui le reçoit et que la rainure (93) comporte à chaque extrémité dégagement dans lequel, par recul de l'axe de manoeuvre (90) sous l'effet de l'action du ressort (95), est engagé le doigt saillant (94).

12. Outil selon l'une quelconque des revendications 2 à 11, **caractérisé en ce que** l'un des blocs mâchoire est doté d'une butée réglable (10) pour limiter la longueur de dénudage, formée d'une tige coudée en extrémité et engagée de manière réglable en position axiale dans un perçage traversant dudit bloc.

13. Outil de coupe selon la revendication 1, **caractérisé en ce que** l'un (2) des deux blocs mâchoires est équipé d'une lame de coupe configurée pour le retrait de la couche semi-conducteur externe pelable et que l'autre (3) bloc mâchoire est équipé d'une lame de coupe (12) configurée pour le retrait de la couche semi-conducteur externe non pelable, lesdites lames de coupe (11, 12) étant destinées à former saillie dans la rainure en Vé de leur bloc mâchoire respectif.

14. Outil selon la revendication 13, **caractérisé en ce que** la lame de coupe (11) configurée pour le retrait de la couche semi conductrice pelable est montée de manière amovible sur un mécanisme (13) d'ajustement de la profondeur de coupe, monté dans un alésage traversant formé dans le bloc mâchoire (2) et ce orthogonalement à l'axe longitudinal du logement du câble, ledit alésage débouchant dans la rainure en Vé dudit bloc mâchoire et ledit mécanisme (13) comprenant :
- un support de lame (130), de forme cylindrique, recevant en extrémité avant la lame de coupe (11), et doté en extrémité arrière d'un taraudage borgne,
- un premier fourreau de guidage (131) doté d'un alésage cylindrique interne dans lequel est monté de manière libre en translation et fixe en rotation le support de lame (130),
- un second fourreau de guidage (13), de forme cylindrique, doté d'un alésage traversant cylindrique dans lequel est monté de manière fixe en rotation et libre en translation le premier fourreau de guidage (131), ledit second fourreau de guidage (132) étant monté de manière fixe en translation et libre en rotation dans l'alésage traversant du bloc mâchoire correspondant,
- un organe élastique (133) agissant simultanément sur le premier fourreau de guidage (131) et le second fourreau de guidage (132) et sollicitant ces derniers dans le sens de leur écartement mutuel,
- une vis de manoeuvre (134) engagée par sa tige filetée dans le taraudage du support de lame (130) et bloquée en translation dans le premier fourreau de guidage (131),
- un bouton de manoeuvre (135) accouplé à la tête de la vis de manoeuvre (134),
de sorte que par rotation du bouton de manoeuvre 134 soit réglée la saillie de la lame de coupe (11) par rapport à l'extrémité avant du premier fourreau de guidage (131).

15. Outil selon la revendication 14, **caractérisé en ce que** le premier fourreau de guidage (131) est doté d'une lumière traversante (136), diamétrale, de forme oblongue, et que le support de lame de coupe (130) est doté d'au moins un pion radial (130a) engagé dans la lumière traversante (136) du premier fourreau de guidage (130).

16. Outil selon la revendication 14 ou la revendication 15, **caractérisé en ce que** le premier fourreau de guidage (131) comporte une collerette avant (131a), que le second fourreau de guidage (132), en saillie dans son alésage interne, présente au moins un pion radial (137) engagé dans la lumière traversante (136) du premier fourreau de guidage (131) et que l'organe élastique (133) constitué par un ressort à spires est monté en compression autour du premier fourreau (131) entre la collerette (131a) de ce dernier et le pion radial (137).

17. Outil selon l'une quelconque des revendications 13 à 16, **caractérisé en ce que** la tige de la vis de manoeuvre (134) en avant de sa tête présente une gorge circulaire (134a) dans laquelle est engagée tangentiellement une goupille (131 b) engagée dans deux perçages traversants pratiqués de manière axialement alignés dans le premier fourreau de guidage (131).

18. Outil selon l'une quelconque des revendications 13 à 17, **caractérisé en ce que** le bouton de manoeuvre (135) présente un alésage cylindrique interne et vient coiffer, par l'alésage interne, la tête de la vis de manoeuvre (135), que la tête de la vis (135) est dotée d'un doigt radial saillant (134b) engagé dans une lumière oblongue (135a) pratiquée dans la paroi du bouton de manoeuvre (135), et s'étendant selon une génératrice de l'alésage du bouton de manoeuvre (135), que ledit bouton de manoeuvre (135) présente en avant une série de crans d'indexation (138) formant créneaux et que le premier fourreau de guidage (131) présente au moins un doigt saillant (131c), le bouton de manoeuvre (135) par engagement de l'un de ses crans (138) autour du doigt saillant étant immobilisé en rotation.

19. Outil selon la revendication 18, **caractérisée en ce que** la tête de la vis (134) est dotée d'un perçage radial dans lequel sont introduits un ressort à spire (139) et une bille d'indexation (140) et que la paroi du bouton de manoeuvre (135) présente deux perçages radiaux d'indexation (141) distants l'un de l'autre et formé selon une même génératrice, en position d'engagement de l'un des crans (138) autour du pion de blocage (131 c) l'un des perçages d'indexation (141) venant en regard de la bille (140) pour recevoir cette dernière, et en position de dégagement l'autre perçage d'indexation (141) venant en regard de la bille (140) pour recevoir cette dernière.

20. Outil selon l'une quelconque des revendications 13 à 19, **caractérisé en ce que** le second support est doté d'une collerette arrière (142), que l'alésage traversant du bloc présente un lamage dans lequel est engagée la collerette arrière (142) et que le mécanisme (13) d'ajustement de la profondeur de coupe est immobilisé dans l'alésage du bloc mâchoire par un anneau élastique (143) engagé dans une rainure formée dans le lamage en arrière de la position de la collerette (142).

21. Outil selon l'une quelconque des revendications 13 à 20, **caractérisé par** un mécanisme (9') d'orientation angulaire de la lame de coupe, ce mécanisme d'orientation (9') agissant sur le mécanisme de réglage (13) afin de l'amener, par pivotement dans l'alésage du bloc mâchoire d'une position de coupe en hélice vers une position de coupe circulaire et inversement.

22. Outil selon la revendication 21, **caractérisé en ce que** le mécanisme d'orientation (9') de la lame de coupe agit sur une saillie longitudinale (132a) formée sur un méplat longitudinal du second fourreau de guidage (132) et comprend un axe de manoeuvre (90') engagé en rotation dans un perçage borgne pratiqué dans le bloc mâchoire (2) et débouchant tangentiellement dans l'alésage de ce dernier, ledit axe de manoeuvre (90') étant pourvu d'une gorge circulaire (91') dans laquelle est engagée la saillie longitudinale (132a) du second fourreau de guidage (132), ledit axe de manoeuvre (90'), à distance de la gorge (91') étant engagé dans une bague (92') immobilisée dans le perçage borgne tangentiel, ladite bague comportant une rainure traversante (93') sous forme d'hélice, formant came, dans laquelle est engagée un doigt saillant radial (94') fixé à l'axe de manoeuvre (90'), ledit axe de manoeuvre, extérieurement au perçage qui le reçoit, recevant un bouton de manoeuvre (96').

23. Outil selon la revendication 22, **caractérisé par** un ressort à spires non jointives (95') monté en compression entre l'axe de manoeuvre (90') et le fond du perçage tangentiel borgne qui le reçoit et que la rainure (93') comporte à chaque extrémité dégagement dans lequel, par recul de l'axe de manoeuvre (90') sous l'effet de l'action du ressort (95'), est engagé le doigt saillant (94').

24. Outil selon l'une quelconque des revendications 13 à 23, **caractérisé en ce que** la lame de coupe (12) configurée pour le retrait de la couche semi-conducteur non pelable, est montée de manière amovible sur un mécanisme (15) d'ajustement de la profondeur de coupe comprenant un support de lame (151) présentant une section droite substantiellement de forme oblongue, ledit support recevant de manière amovible la lame de coupe, et étant engagé avec possibilité de coulissement dans un perçage traversant (31) pratiqué dans le bloc de mâchoire (3) correspondant et débouchant dans la rainure en Vé, ledit support de lame (151) étant doté d'un taraudage, pratiqué dans un bossage longiligne (152) qu'il présente en partie inférieure, lequel bossage longiligne (152) est engagé dans une gorge pratiquée dans le bloc mâchoire de manière débouchante dans la rainure en Vé et dans le perçage traversant (31) et une vis de manoeuvre (160) est engagée par sa tige filetée d'abord dans un perçage traversant pratiqué dans un bossage arrière (30) du bloc mâchoire (3) et ensuite dans le taraudage du support de lame (151), ladite vis (160) étant bloquée en translation par rapport au bloc mâchoire (3).

25. Outil selon la revendication 24, **caractérisé par** un organe de blocage (16) du support de lame (151) en translation.

26. Outil selon l'une quelconque des revendications 13 à 25, **caractérisé en ce que** les deux blocs mâchoire (2, 3) sont dotés chacun d'une butée réglable (17, 18) pour limiter la longueur de coupe, chaque butée (17, 18) étant constituée par une plaquette plane portée de manière transversale au logement du câble par un axe support engagé de manière coulissante dans un perçage pratiqué dans le bloc mâchoire correspondant, ledit axe coopérant dans ledit alésage avec un mécanisme d'indexation à bille.

27. Jeu d'outils pour apprêter les extrémités des câbles en vue de leur raccordement électrique, **caractérisé en ce qu'**il comprend un premier outil selon l'une quelconque des revendications 2 à 12 et un second outil selon l'une quelconque des revendications 13 à 26.

## Claims

1. A tool for baring electric cables comprising a support (1) on which two jaw blocks (2, 3) are installed, both cooperating with the same mechanism (4) for adjusting their mutual positions, at least one of the two blocks being equipped with a V-shaped groove defining with the other jaw block a housing for the cable to be bared and at least one of the two blocks being equipped with at least one cutting tool, the frame (1) comprising two parallel columns (5) joined rigidly at the end by two struts (6), these two columns (5) and these two struts (6) forming a rigid frame, and the two jaw blocks (2, 3) being mounted slidably on the two columns (5), **characterised in that**:
- the two jaw blocks are disposed symmetrically with respect to a geometric plane (P) central to the support and orthogonal to the columns (5) of the latter,
- the two jaw blocks (2, 3) are both disposed on the same side of the frame defined by the two columns (5) and the two struts (6),
- and the mechanism (4) for adjusting the position of the two jaw blocks that provides symmetrical positioning of the two jaws with respect to the geometric plane defined above comprises a threaded rod (40) with a manoeuvring knob (41) extending parallel to the columns (5) between the two struts (6), said threaded rod (40) being immobile with respect to translation and able to move in rotation with respect to the support (1) and comprising a first section (401) threaded with a right-hand thread, engaged by screwing in a through tapping formed in one of the jaw blocks (2, 3), and a second section (402) threaded with a left-hand thread with the same value as that of the thread of the previous section, said second threaded section (402) being engaged in a through tapping formed in the other jaw block (2, 3).

2. A tool according to claim 1, **characterised in that** one (2) of the two jaw blocks (2, 3) is equipped with a cutting blade (7) and **in that** this cutting blade (7) is configured for removing the external insulating sheath of the cable and its aluminium ribbon and for removing the insulating layer of the cable and the associated internal semiconducting layer.

3. A tool according to claim 2, **characterised in that** the other jaw block is equipped with a cutting blade intended to form a bevel at the end of the insulation.

4. A tool according to claim 2 or claim 3, **characterised in that** the cutting blade configured for removing the external insulating sheath and its aluminium ribbon and for removing the insulating layer with the internal semiconducting layer is mounted removably on a mechanism (8) for adjusting the cutting depth, comprising:
- a cylindrically shaped blade support (80) receiving the cutting blade (7) at the front end, removably, and provided at the rear part with a threaded section,
- a guide sleeve (81), substantially cylindrical in shape, provided along its longitudinal central geometric axis with a through internal cylindrical bore, receiving the blade support (80) free with respect to translation and fixed with respect to rotation, said blade support (80) passing right through the guide sleeve (81) and said guide sleeve (81) being engaged so as to be able to rotate freely in the through bore of a protrusion (20) formed on the corresponding jaw block (2) and extending laterally to the V-shaped groove of this jaw block,
- a knurled adjustment wheel (82) provided with an axial thread designed to receive the threaded section of the blade support (80), said knurled wheel being partly engaged in the through bore in the protrusion (20) and being immobilised with respect to translation in said bore and free to rotate in the latter, so that, by rotation of the knurled wheel (82) in one direction or the other, the blade support (80) and the cutting blade (7) are moved in translation and the blade (7) is brought to the desired projecting position with respect to the cable housing.

5. A tool according to claim 4, **characterised in that** the knurled adjustment wheel (82) is associated with a means of indexing the various angular positions that it is assigned to adopt and consequently of indexing the various corresponding projection values of the cutting blade with respect to the cable housing.

6. A tool according to claim 5, **characterised in that** the indexing means associated with the knurled adjustment wheel (82) comprises an end collar (820) formed on the knurled wheel (82) and provided with a series of hollow indentations angularly distributed equally over the circumference of a circle centred on the rotation axis of the knurled wheel (82), and a ball (820) urged towards the collar under the effect of the action of an elastic member in order to engage in one of the indentations in the collar (820), said ball (821) and said elastic member (822) being mounted in a blind piercing formed in the protrusion (20).

7. A tool according to claim 6, **characterised in that** the collar (820) of the knurled wheel (82) is engaged in a countersink (200) formed in the bore in the protrusion (20), **in that** the blind piercing designed to receive the ball (821) and its elastic member (822) emerges in the flat face constituting the bottom of this countersink (200) and **in that**, behind the position occupied by the collar (820) in the countersink (200), a circular flute is formed in the latter in which an elastic annulus (823) is engaged providing the translational immobilisation, in the bore (200) of the lateral protrusion, of the mechanism (8) for adjusting the cutting depth.

8. A tool according to any one of claims 4 to 7, **characterised in that** the cutting blade support is provided with a diametral through oblong aperture (800) in which a through stud is engaged, engaged by its two ends in two through piercings, axially aligned, formed in the wall of the sleeve.

9. A tool according to any one of claims 4 to 8, **characterised by** a mechanism (9) for angular orientation of the cutting blade (7), this orientation mechanism (9) acting on the adjustment mechanism (8) in order to bring it, by pivoting in the bore in the lateral protrusion (20), from a position of cutting in a helix to a position of circular cutting and vice versa.

10. A tool according to claim 9, **characterised in that** the mechanism (9) for orienting the cutting blade acts on a longitudinal projection (811) formed on a longitudinal flat on the guide sleeve (81) and comprises a manoeuvring spindle (90) rotationally engaged in a blind piercing formed in the lateral protrusion (20) and emerging tangentially in the bore in the latter, said manoeuvring spindle (90) being provided with a circular groove (91) in which the longitudinal projection (811) of the guide sleeve (81) is engaged, said manoeuvring spindle (90), at a distance from the groove (91), being engaged in a ring (92) immobilised in the tangential blind piercing, said ring comprising a through groove (93) in the form of a helix, forming a cam, in which a radial projecting finger (94) is engaged, fixed to the manoeuvring spindle (90), said manoeuvring spindle, externally to the piercing that receives it, receiving a manoeuvring knob (96).

11. A tool according to claim 10, **characterised by** a spring with non-contiguous turns (95) mounted compressed between the manoeuvring spindle (90) and the bottom of the blind tangential piercing that receives it and in that the groove (93) comprises, at each end, a clearance in which, by withdrawal of the manoeuvring spindle (90) under the effect of the action of the spring (95), the projecting finger (94) is engaged.

12. A tool according to any one of claims 2 to 11, **characterised in that** one of the jaw blocks is provided with an adjustable stop (10) for limiting the baring length, formed by a rod angled at the end and engaged so as to be adjustable for axial position in a through piercing in said block.

13. A cutting tool according to claim 1, **characterised in that** one (2) of the two jaw blocks is equipped with a cutting blade configured for removing the peelable external semiconducting layer and **in that** the other (3) jaw block is equipped with a cutting blade (12) configured for removing the non-peelable external semiconducting layer, said cutting blades (11, 12) being intended to form a projection in the V-shaped groove of their respective jaw block.

14. A tool according to claim 13, **characterised in that** the cutting blade (11) configured for removing the peelable semiconducting layer is mounted removably on a mechanism (13) for adjusting the cutting depth, mounted in a through bore formed in the jaw block (2), orthogonally to the longitudinal axis of the cable housing, said bore emerging in the V-shaped groove of said jaw block and said mechanism (13) comprising:
- a cylindrically shaped blade support (130) receiving the cutting blade (11) at the front end and provided with a blind tapping at the rear end,
- a first guide sleeve (131) provided with an internal cylindrical bore in which the blade support (130) is mounted so as to be free with respect to translation and fixed with respect to rotation,
- a second guide sleeve (132), cylindrical in shape, provided with a cylindrical through bore in which the first guide sleeve (131) is mounted so as to be fixed with respect to rotation and free with respect to translation, said second guide sleeve (132) being mounted so as to be fixed with respect to translation and free with respect to rotation in the through bore in the corresponding jaw block,
- an elastic member (133) acting simultaneously on the first guide sleeve (131) and the second guide sleeve (132) and urging the latter in the direction of their mutual separation,
- a manoeuvring screw (134) engaged by its threaded rod in the tapping in the blade support (130) and locked with respect to translation in the first guide sleeve (131),
- a manoeuvring knob (135) coupled to the head of the manoeuvring screw (134),
so that, by rotation of the manoeuvring knob (134), the projection of the cutting blade (11) is adjusted with respect to the front end of the first guide sleeve (131).

15. A tool according to claim 14, **characterised in that** the first guide sleeve (131) is provided with an oblong shaped diametral through aperture (136) and **in that** the cutting blade support (130) is provided with at least one radial stud (130a) engaged in the through aperture (136) in the first guide sleeve (130).

16. A tool according to claim 14 or claim 15, **characterised in that** the first guide sleeve (131) comprises a front collar (131a), **in that** the second guide sleeve (132), projecting in its internal bore, has at least one radial stud (137) engaged in the through aperture (136) in the first guide sleeve (131) and **in that** the elastic member (133) comprising a spring with turns is mounted in compression around the first sleeve (131) between the collar (131a) of the latter and the radial stud (137).

17. A tool according to any one of claims 13 to 16, **characterised in that** the rod of the manoeuvring screw (134) in front of its head has a circular groove (134a) in which there is tangentially engaged a pin (131b) engaged in two through piercings formed so as to be axially aligned in the first guide sleeve (131).

18. A tool according to any one of claims 13 to 17, **characterised in that** the manoeuvring knob (135) has an internal cylindrical bore and, through the internal bore, covers the head of the manoeuvring screw (135), **in that** the head of the screw (135) is provided with a projecting radial finger (134b) engaged in an oblong aperture (135a) formed in the wall of the manoeuvring knob (135) and extending along a generatrix of the bore in the manoeuvring knob (135), **in that** the manoeuvring knob (135) has in front a series of indexing notches (138) forming crenellations and **in that** the first guide sleeve (131) has at least one projecting finger (131c), the manoeuvring knob (135), by engagement of one of its notches (138) around the projecting finger, being immobilised with respect to rotation.

19. A tool according to claim 18, **characterised in that** the head of the screw (134) is provided with a radial piercing in which a spring with turns (139) and an indexing ball (140) are introduced and **in that** the wall of the manoeuvring knob (135) has two radial indexing piercings (141) distant from each other and formed along the same generatrix, in the position of engagement of one of the notches (138) around the locking stud (131c), one of the indexing piercings (141) coming opposite the ball (140) in order to receive the latter, and in the position of disengagement of the other indexing piercing (141) coming opposite the ball (140) in order to receive the latter.

20. A tool according to any one of claims 13 to 19, **characterised in that** the second support is provided with a rear collar (142), **in that** the bore passing through the block has a countersink in which the rear collar (142) is engaged and **in that** the mechanism (13) for adjusting the cutting depth is immobilised in the bore in the jaw block by an elastic annulus (143) engaged in a groove formed in the countersink behind the position of the collar (142).

21. A tool according to any one of claims 13 to 20, **characterised by** a mechanism (9') for angular orientation of the cutting blade, this orientation mechanism (9') acting on the adjustment mechanism (13) so as to bring it, by pivoting in the bore of the jaw block, from a position of cutting in a helix to a position of circular cutting and vice versa.

22. A tool according to claim 21, **characterised in that** the mechanism (9') for orienting the cutting blade acts on a longitudinal projection (132a) formed on a longitudinal flat on the second guide sleeve (132) and comprises a manoeuvring spindle (90') engaged with rotation in a blind piercing formed in the jaw block (2) and emerging tangentially in the bore in the latter, said manoeuvring spindle (90') being provided with a circular groove (91') in which the longitudinal projection (132a) of the second guide sleeve (132) is engaged, said manoeuvring spindle (90'), at a distance from the groove (91'), being engaged in a ring (92') immobilised in the tangential blind piercing, said ring comprising a through groove (93') in the form of a helix forming a cam, in which a radial projecting finger (94') fixed to the manoeuvring spindle (90') is engaged, said manoeuvring spring, externally to the piercing that receives it, receiving a manoeuvring knob (96').

23. A tool according to claim 22, **characterised by** a spring with non-contiguous turns (95') mounted in compression between the manoeuvring spindle (90') and the bottom of the blind tangential piercing that receives it and in that the groove (93') comprises, at each end, a recess in which, by retraction of the manoeuvring spindle (90') under the effect of the action of the spring (95'), the projecting finger (94') is engaged.

24. A tool according to any one of claims 13 to 23, **characterised in that** the cutting blade (12) configured for removal of the non-peelable semiconducting layer is mounted removably on a mechanism (15) for adjusting the cutting depth comprising a blade support (151) having a substantially oblong shaped cross-section, said support removably receiving the cutting blade and being engaged with the possibility of sliding in a through piercing (31) formed in the corresponding jaw block (3) and emerging in the V-shaped groove, said blade support (151) being provided with a tapping, formed in a slender protrusion (152) that it has at the bottom part, said slender protrusion (152) being engaged in a groove formed in the jaw block so as to emerge in the V-shaped groove and in the through piercing (31), and a manoeuvring screw (160) is engaged by its threaded rod firstly in a through piercing formed in a rear protrusion (30) on the jaw block (3) and then in the tapping in the blade support (151), said screw (160) being translationally locked with respect to the jaw block (3).

25. A tool according to claim 24, **characterised by** a member (16) for locking the blade support (151) with respect to translation.

26. A tool according to any one of claims 13 to 25, **characterised in that** the two jaw blocks (2, 3) are each provided with an adjustable stop (17, 18) for limiting the cutting length, each stop (17, 18) comprising a flat tip carried transversely to the housing of the cable by a support spindle slidably engaged in a drilling formed in the corresponding jaw block, said spindle cooperating in said bore with a ball-type indexing mechanism.

27. A set of tools for preparing the ends of the cables with a view to electrical connection thereof, **characterised in that** it comprises a first tool according to any one of claims 2 to 12 and a second tool according to any one of claims 13 to 26.

## Patentansprüche

1. Werkzeug zum Abisolieren von elektrischen Kabeln, umfassend ein Gehäuse (1), auf dem zwei Klemmblöcke (2, 3) angeordnet sind, die beide mit einem selben Mechanismus (4) zur Einstellung ihrer wechselseitigen Positionen zusammenwirken, wobei mindestens einer der beiden Blöcke mit einer V-förmigen Nut versehen ist, die mit dem anderen Klemmblock eine Lagerung für das freizulegende Kabel definiert, und wobei mindestens einer der beiden Blöcke mit mindestens einem Schneidwerkzeug versehen ist, wobei das Gehäuse (1) zwei parallele Säulen (5) umfasst, die starr am Ende durch zwei Querstreben (6) verbunden sind, wobei diese beiden Sälen (5)) und diese beiden Querstreben (6) einen starren Rahmen bilden, wobei die beiden Klemmblöcke (2, 3) gleitend auf den beiden Säulen (5) montiert sind, **dadurch gekennzeichnet, dass**:
- die beiden Klemmblöcke symmetrisch zu einer geometrischen Ebene (P) angeordnet sind, die zum Gehäuse mittig und zu den Säulen (5) dieses letztgenannten orthogonal sind,
- die beiden Klemmblöcke (2, 3) beide auf einer selben Seite des Rahmens angeordnet sind, der von den beiden Säulen (5) und den beiden Querstreben (6) gebildet ist,
- und der Mechanismus (4) zur Positionseinstellung der beiden Klemmblöcke, der eine symmetrische Positionierung der beiden Klemmblöcke in Bezug zur oben definierten geometrischen Ebene gewährleistet, eine Gewindestange (40) mit einem Betätigungsknopf (41) umfasst, die sich parallel zu den Säulen (5) zwischen den beiden Querstreben (6) erstreckt, wobei die Gewindestange (40) in Translation unbeweglich und in Drehung in Bezug zum Gehäuse (1) beweglich ist und einen ersten Gewindeabschnitt (401) mit einer rechten Steigung, der in ein durchgehendes Gewinde geschraubt ist, das in einem der Klemmblöcke (2, 3) vorgesehen ist, und einen zweiten Gewindeabschnitt (402) mit einer linken Steigung mit demselben Wert wie jener der Steigung des vorhergehenden Abschnitts umfasst, wobei der zweite Gewindeabschnitt (402) in ein durchgehendes Gewinde geschraubt ist, das in dem anderen Klemmblock (2, 3) vorgesehen ist.

2. Werkzeug nach Anspruch 1, **dadurch gekennzeichnet, dass** einer (2) der beiden Klemmblöcke (2, 3) mit einem Schneidblatt (7) ausgestattet ist, und dass dieses Schneidblatt (7) für das Abziehen des äußeren Isoliermantels des Kabels und seines Aluminiumbandes und für das Abziehen der Isolierschicht des Kabels und der zugehörigen inneren halb leitenden Schicht ausgeführt ist.

3. Werkzeug nach Anspruch 2, **dadurch gekennzeichnet, dass** der andere Klemmblock mit einem Schneidblatt versehen ist, das für die Bildung einer abgefasten Kante am Ende des Isoliermittels ausgestattet ist.

4. Werkzeug nach Anspruch 2 oder Anspruch 3, **dadurch gekennzeichnet, dass** das Schneidblatt, das für das Abziehen des äußeren Isoliermantels und seines Aluminiumbandes und für das Abziehen der Isolierschicht mit der inneren halb leitenden Schicht ausgeführt ist, abnehmbar auf einem Mechanismus (8) zum Einstellen der Schneidtiefe montiert ist, umfassend:
- einen Schneidblatthalter (80) von zylindrischer Form, der am vorderen Ende abnehmbar das Schneidblatt (7) aufnimmt und im hinteren Teil mit einem Gewindeabschnitt versehen ist,
- eine Führungshülle (81) von im Wesentlichen zylindrischer Form, die entlang ihrer geometrischen Längsmittelachse mit einer durchgehenden inneren zylindrischen Bohrung versehen ist, die frei in Translation und drehfest den Schneidblatthalter (80) aufnimmt, wobei der Schneidblatthalter (80) durch die Führungshülle (81) hindurchgeht und die Führungshülle (81) drehfrei in der Durchgangsbohrung eines Vorsprungs (20) im Eingriff steht, der auf dem entsprechenden Klemmblock (2) ausgebildet ist und sich seitlich zur V-förmigen Nut dieses Klemmblocks erstreckt,
- ein Einstellrad (82), das mit einem Axialgewinde versehen ist, das dazu vorgesehen ist, den Gewindeabschnitt des Schneidblatthalters (80) aufzunehmen, wobei das Rad teilweise in die durchgehende Bohrung des Vorsprungs (20) eingreift und in Translation in der Bohrung festgestellt und in dieser letztgenannten frei drehbar ist, so dass durch Drehung des Rades (82) in die eine oder andere Richtung der Schneidblatthalter (80) und das Schneidblatt (7) in Translation verschoben und das Schneidblatt (7) in die erforderliche vorspringende Position in Bezug zur Lagerung des Kabels gebracht werden.

5. Werkzeug nach Anspruch 4, **dadurch gekennzeichnet, dass** das Einstellrad (82) einem Mittel zur Indexierung der verschiedenen Winkelpositionen zugeordnet ist, die es einnehmen soll, und folglich zur Indexierung der verschiedenen entsprechenden Vorsprungswerte des Schneidblattes in Bezug zur Lagerung des Kabels.

6. Werkzeug nach Anspruch 5, **dadurch gekennzeichnet, dass** das dem Einstellrad (82) zugeordnete Indexierungsmittel von einem Endkragen (820), der auf dem Rad (82) ausgebildet und mit einer Reihe von hohlen Eindrücken versehen ist, die im Winkel auf dem Umfang eines Kreises gleich verteilt sind, der auf der Drehachse des Rades (82) zentriert ist, und von einer Kugel (820) gebildet ist, die unter der Wirkung der Betätigung eines elastischen Elements zum Kragen gedrückt wird, um in einen der Eindrücke des Kragens (820) einzugreifen, wobei die Kugel (821) und das elastische Element (822) in einer Scheinbohrung montiert sind, die in dem Vorsprung (20) vorgesehen ist.

7. Werkzeug nach Anspruch 6, **dadurch gekennzeichnet, dass** der Kragen (820) des Rades (82) in eine Senkung (200) eingreift, die in der Bohrung des Vorsprungs (20) vorgesehen ist, dass die Scheinbohrung, die für die Aufnahme der Kugel (821) und ihres elastischen Elements (822) vorgesehen ist, in die flache Seite mündet, die den Boden dieser Senkung (200) darstellt, und dass hinter der von dem Kragen (820) in der Senkung (200) eingenommenen Position in dieser letztgenannten eine kreisförmige Rille ausgebildet ist, in der ein elastischer Ring (823) im Eingriff steht, der die Feststellung des Mechanismus (8) zur Einstellung der Schnitttiefe in Translation in der Bohrung (200) des seitlichen Vorsprungs gewährleistet.

8. Werkzeug nach einem der Ansprüche 4 bis 7, **dadurch gekennzeichnet, dass** der Schneidblatthalter mi einer diametralen, durchgehenden länglichen Öffnung (800) versehen ist, in der ein durchgehender Stift im Eingriff steht, der mit seinen beiden Enden in zwei durchgehende Bohrungen eingreift, die axial ausgerichtet und in der Wand der Hülle ausgebildet sind.

9. Werkzeug nach einem der Ansprüche 4 bis 8, **gekennzeichnet, durch** einen Winkelausrichtmechanismus (9) für den Schneidblatthalter (7), wobei dieser Ausrichtmechanismus (9) auf den Einstellmechanismus (8) einwirkt, um ihn **durch** Schwenken in der Bohrung des seitlichen Vorsprungs (20)von einer spiralförmigen Schneidposition in eine kreisförmige Schneidposition und umgekehrt zu bringen.

10. Werkzeug nach Anspruch 9, **dadurch gekennzeichnet, dass** der Ausrichtmechanismus (9) des Schneidblattes auf einen länglichen Vorsprung (811) einwirkt, der auf einer länglichen Abflachung der Führungshülle (81) ausgebildet ist, und eine Betätigungsachse (90) umfasst, die in Drehung in eine Scheinbohrung eingreift, die in dem seitlichen Vorsprung (20) vorgesehen ist und tangential in die Bohrung dieses letztgenannten einmündet, wobei die Betätigungsachse (90) mit einer kreisförmigen Rille (91) versehen ist, in der der längliche Vorsprung (811) der Führungshülle (81) in Eingriff steht, wobei die Fernbetätigungsachse (90) der Rille (91) in einem Ring (92) in Eingriff steht, der in der tangentialen Scheinbohrung festgestellt ist, wobei der Ring eine Quernut (93) in Spiralform umfasst, die eine Nocke bildet, in der ein radialer herausragender Finger (94) in Eingriff steht, der an der Betätigungsachse (90) befestigt ist, wobei die Betätigungsachse außerhalb der Bohrung, die sie aufnimmt, einen Betätigungsknopf (96) aufnimmt.

11. Werkzeug nach Anspruch 10, **gekennzeichnet durch** eine Feder mit nicht aneinander stoßenden Windungen (95), die in Kompression zwischen der Betätigungsachse (90) und dem Boden der tangentialen Scheinbohrung, die sie aufnimmt, montiert ist, und dass die Nut (93) an jedem Ende eine Aussparung umfasst, in der **durch** Rückzug der Betätigungsachse (90) unter der Wirkung der Betätigung der Feder (95) der herausragende Finger (94) in Eingriff steht.

12. Werkzeug nach einem der Ansprüche 2 bis 11, **dadurch gekennzeichnet, dass** einer der Klemmblöcke mit einem einstellbaren Anschlag (10) versehen ist, um die Abisoliermenge zu begrenzen, der von einer am Ende geknickten Stange gebildet und einstellbar in axialer Position in eine durchgehende Bohrung des Blocks eingreift.

13. Schneidwerkzeug nach Anspruch 1, **dadurch gekennzeichnet, dass** einer (2) der beiden Klemmblöcke mit einem Schneidblatt versehen ist, das für das Zurückschieben der abziehbaren äußeren halb leitenden Schicht ausgeführt ist, und dass der andere (3) Klemmblock mit einem Schneidblatt (12) versehen ist, das für das Zurückschieben der nicht abziehbaren äußeren halb leitenden Schicht ausgeführt ist, wobei die Schneidblätter (11, 12) dazu bestimmt sind, einen Vorsprung in der V-förmigen Nut ihres jeweiligen Klemmblocks zu bilden.

14. Werkzeug nach Anspruch 13, **dadurch gekennzeichnet, dass** das Schneidblatt (11), das für das Zurückschieben der abziehbaren halb leitenden Schicht ausgeführt ist, abnehmbar auf einem Mechanismus (13) zur Anpassung der Schnitttiefe befestigt ist, der in einer in dem Klemmblock (2) ausgebildeten durchgehenden Bohrung montiert ist, und zwar orthogonal zur Längsachse der Lagerung des Kabels, wobei die Bohrung in die V-förmige Nut des Klemmblocks mündet, und der Mechanismus (13) umfasst:
- einen Schneidblatthalter (130) von zylindrischer Form, der am vorderen Ende das Schneidblatt (11) aufnimmt und am hinteren Ende mit einem Scheingewinde versehen ist,
- eine erste Führungshülle (131), die mit einer inneren zylindrischen Bohrung versehen ist, in der frei in Translation und drehfest der Schneidblatthalter (130) montiert ist,
- eine zweite Führungshülle (132) von zylindrischer Form, die mit einer zylindrischen durchgehenden Bohrung versehen ist, in der drehfest und frei in Translation die erste Führungshülle (131) montiert ist, wobei die zweite Führungshülle (132) fest in Translation und drehfrei in der durchgehenden Bohrung des entsprechenden Klemmblocks montiert ist,
- ein elastisches Element (133), das gleichzeitig auf die erste Führungshülle (131) und die zweite Führungshülle (132) einwirkt und diese letztgenannten in die Richtung ihrer Entfernung voneinander drückt,
- eine Betätigungsschraube (134), die mit ihrer Gewindestange in das Gewinde des Schneidblatthalters (130) eingreift und in Translation in der ersten Führungshülle (131) festgestellt ist,
- einen Betätigungsknopf (135), der mit dem Kopf der Betätigungsschraube (134) gekoppelt ist,
so dass durch Drehung des Betätigungskopfes (134) der Vorsprung des Schneidblattes (11) in Bezug zum vorderen Ende der ersten Führungshülle (131) eingestellt wird.

15. Werkzeug nach Anspruch 14, **dadurch gekennzeichnet, dass** die erste Führungshülle (131) mit einer diametralen durchgehenden Öffnung (136) von länglicher Form versehen ist, und dass der Schneidblatthalter (130) mit mindestens einem radialen Stift (130a) versehen ist, der in die durchgehende Öffnung (136) der ersten Führungshülle (130) eingreift.

16. Werkzeug nach Anspruch 14 oder Anspruch 15, **dadurch gekennzeichnet, dass** die erste Führungshülle (131) einen vorderen Kragen (131a) umfasst, dass die zweite Führungshülle (132), die in ihrer inneren Bohrung herausragt, mindestens einen radialen Stift (137) aufweist, der in die durchgehende Öffnung (136) der ersten Führungshülle (131) eingreift, und dass das elastische Element (133), das von einer Feder mit Windungen gebildet ist, in Kompression um die erste Hülle (131) zwischen dem Kragen (131a) dieser letztgenannten und dem radialen Stift (137) montiert ist.

17. Werkzeug nach einem der Ansprüche 13 bis 16, **dadurch gekennzeichnet, dass** die Stange der Betätigungsschraube (134) vor ihrem Kopf eine kreisförmige Rille (134a) aufweist, in die tangential ein Stift (131b) eingreift, der in zwei durchgehenden Bohrungen in Eingriff steht, die axial ausgerichtet in der ersten Führungshülle (131) vorgesehen sind.

18. Werkzeug nach einem der Ansprüche 13 bis 17, **dadurch gekennzeichnet, dass** der Betätigungsknopf (135) eine innere zylindrische Bohrung aufweist und mit der inneren Bohrung an den Kopf der Betätigungsschraube (135) angrenzt, dass der Kopf der Schraube (135) mit einem herausragenden radialen Finger (134b) versehen ist, der in eine längliche Öffnung (135a) eingreift, die in der Wand des Betätigungsknopfes (135) vorgesehen ist, und sich entlang einer Mantellinie der Bohrung des Betätigungsknopfes (135) erstreckt, dass der Betätigungsknopf (135) vorne eine Reihe von Indexierungsrasten (138) aufweist, die Einkerbungen bilden, und dass die erste Führungshülle (131) mindestens einen herausragenden Finger (131c) aufweist, wobei der Betätigungsknopf (135) durch Eingreifen einer seiner Rasten (138) um den herausragenden Finger in Drehung festgestellt ist.

19. Werkzeug nach Anspruch 18, **dadurch gekennzeichnet, dass** er Kopf der Schraube (134) meiner radialen Bohrung versehen ist, in die eine Feder mit Windungen (139) und eine Indexierungskugel (140) eingeführt werden, und dass die Wand des Betätigungsknopfes (135) zwei radiale Indexierungsbohrungen (141), die voneinander entfernt und entlang einer selben Mantellinie ausgebildet sind, aufweist, wobei in Eingriffsposition einer der Rasten (138) um den Feststellstift (131c) eine der Indexierungsbohrungen (141) gegenüber der Kugel (140) angeordnet wird, um diese letztgenannte aufzunehmen, und wobei in Freigabeposition die andere Indexierungsbohrung (141) gegenüber der Kugel (140) angeordnet wird, um diese letztgenannte aufzunehmen.

20. Werkzeug nach einem der Ansprüche 13 bis 19, **dadurch gekennzeichnet, dass** der zweite Halter mit einem hinteren Kragen (142) versehen ist, dass die durchgehende Bohrung des Blocks eine Senkung aufweist, in der der hintere Kragen (142) in Eingrifft steht, du dass der Mechanismus (13) zur Anpassung der Schnitttiefe in der Bohrung des Klemmblocks durch einen elastischen Ring (143) festgestellt ist, der in eine Nut eingreift, die in der Senkung hinter der Position des Kragens (142) ausgebildet ist.

21. Werkzeug nach einem der Ansprüche 13 bis 20, **gekennzeichnet durch** einen Winkelausrichtmechanismus (9') des Schneidblattes, wobei dieser Ausrichtmechanismus (9') auf den Einstellmechanismus (13) einwirkt, um ihn durch Schwenken in der Bohrung des Klemmblocks von einer spiralförmigen Schnittposition in eine kreisförmige Schnittposition und umgekehrt zu bringen.

22. Werkzeug nach Anspruch 21, **dadurch gekennzeichnet, dass** der Ausrichtmechanismus (9') des Schneidblattes auf einen länglichen Vorsprung (132a) einwirkt, der auf einer länglichen Abflachung der zweiten Führungshülle (132) ausgebildet ist, und eine Betätigungsachse (90') umfasst, die in Drehung in eine Scheinbohrung eingreift, die in dem Klemmblock (2) vorgesehen ist und tangential in die Bohrung dieses letztgenannten einmündet, wobei die Betätigungsachse (90') mit einer kreisförmigen Rille (91') versehen ist, in der der längliche Vorsprung (132a) der zweiten Führungshülle (132) in Eingriff steht, wobei die Fernbetätigungsachse (90') der Rille (91') in einem Ring (92') in Eingriff steht, der in der tangentialen Scheinbohrung festgestellt ist, wobei der Ring eine Quernut (93') in Spiralform umfasst, die eine Nocke bildet, in der ein radialer herausragender Finger (94') in Eingriff steht, der an der Betätigungsachse (90') befestigt ist, wobei die Betätigungsachse außerhalb der Bohrung, die sie aufnimmt, einen Betätigungsknopf (96') aufnimmt.

23. Werkzeug nach Anspruch 22, **gekennzeichnet durch** eine Feder mit nicht aneinander stoßenden Windungen (95'), die in Kompression zwischen der Betätigungsachse (90') und dem Boden der tangentialen Scheinbohrung, die sie aufnimmt, montiert ist, und dass die Nut (93') an jedem Ende eine Aussparung umfasst, in der **durch** Rückzug der Betätigungsachse (90') unter der Wirkung der Betätigung der Feder (95') der herausragende Finger (94') in Eingriff steht.

24. Werkzeug nach einem der Ansprüche 13 bis 23, **dadurch gekennzeichnet, dass** das Schneidblatt (12), das für das Zurückschieben der nicht abziehbaren halb leitenden Schicht ausgeführt ist, abnehmbar auf einem Mechanismus (15) zur Anpassung der Schnitttiefe montiert ist, umfassend einen Schneidblatthalter (151), der einen Querschnitt von im Wesentlichen länglicher Form aufweist, wobei der Halter abnehmbar das Schneidblatt aufnimmt, und der mit der Möglichkeit des Gleitens in einer durchgehenden Bohrung (31) in Eingriff steht, die in dem entsprechenden Klemmblock (3) vorgesehen ist und in die V-förmige Nut mündet, wobei der Schneidblatthalter (151) mit einem Gewinde versehen ist, das in einem länglichen Vorsprung (152), den er an seinem unteren Teil aufweist, versehen ist, wobei der längliche Vorsprung (152) in eine Rille eingreift, die im Klemmblock derart vorgesehen ist, dass sie in die V-förmige Nut und in die durchgehende Bohrung (31) mündet, wobei eine Betätigungsschraube (160) mit ihrer Gewindestange zuerst in eine durchgehende Bohrung, die in einem hinteren Vorsprung (30) des Klemmblocks (3) vorgesehen ist, und dann in ein Gewinde des Schneidblatthalters (151) eingreift, wobei die Schraube (160) in Translation in Bezug zum Klemmblock (3) festgestellt ist.

25. Werkzeug nach Anspruch 24, **gekennzeichnet, durch** ein Element (16) zum Feststellen des Schneidblatthalters (151) in Translation.

26. Werkzeug nach einem der Ansprüche 13 bis 25, **dadurch gekennzeichnet, dass** die beiden Klemmblöcke (2, 3) jeweils mit einem einstellbaren Anschlag (17, 18) versehen sind, um die Schnittlänge zu begrenzen, wobei jeder Anschlag (17, 18) von einer flachen Platte gebildet ist, die quer zur Lagerung des Kabels von einer Tragachse getragen wird, die gleitend in eine Bohrung eingreift, die in dem entsprechenden Klemmblock vorgesehen ist, wobei die Achse in der Bohrung mit einem Kugelindexierungsmechanismus zusammenwirkt.

27. Werkzeugsatz zum Vorbereiten der Enden der Kabel für ihren elektrischen Anschluss, **dadurch gekennzeichnet, dass** er ein erstes Werkzeug nach einem der Ansprüche 2 bis 12 und ein zweites Werkzeug nach einem der Ansprüche 13 bis 26 umfasst.
